# EUROPEAN PATENT APPLICATION

(11) **EP 2 824 678 A1**
(43) Date of publication of application: **14.01.2015**
(21) Application number: 12869181.3
(22) Date of filing: 20.08.2012
(51) Int. Cl.: H01F 38/14, H02J 17/00

(54) **POWER SUPPLY DEVICE, POWER RECEPTION DEVICE, AND POWER SUPPLY/RECEPTION DEVICE**

(30) Priority: 20.02.2012 JP 2012034174
(71) Applicant: Lequio Power Technology Corp., Okinawa 900-0036 (JP)
(72) Inventor: AKIYA Tomomi, Naha-shi Okinawa 900-0036 (JP)
(74) Representative: Carpmaels & Ransford LLP
(86) International application number: PCT/JP2012/071009
(87) International publication number: WO 2013/125072

(57) **Abstract**

A power supply unit is a power supply device that supplies power to a power reception device using electromagnetic induction. The power supply unit has a power supply coil in which planar coils 4A and 4B that are formed by winding respective wire materials around the same point in the same plane are arranged from an inner side to an outer side in the radial direction. Planar coils 4A and 4B of power supply coil 4 oppose a space in which the power reception coil is arranged. The power supply unit supplies alternating currents having a common frequency to respective planar coils 4A and 4B, thereby generating a magnetic field for supplying power using electromagnetic induction in the space in which the power reception coil is arranged. A static magnetic field that is generated in the arrangement space in the case where a direct current is fed to planar coils 4A and 4B is stronger at a position corresponding to an inner circumference of planar coil 4B than on both sides of that position in the radial direction of power supply coil 4. Also, planar coils 4A and 4B are composed of wire materials of the same kind, and the wire length difference therebetween is less than the length of an outer circumference of planar coil 4B.

## Description

### Technical Field

The present invention relates to contactless power supply using electromagnetic induction.

### Background Art

Light-emitting diodes (hereinafter also referred to as "LEDs"), for example, have conventionally been used in various types of display devices such as traffic lights, advertising signs, destinations signs, and the like. With the recent increase in their luminance and efficiency, light-emitting diodes have started to be used also for indoor and outdoor illumination devices. Patent Document 1 discloses a light bulb type LED lamp. The light bulb type LED lamp described in Patent Document 1 has an outer shape that is similar to the outer shape of a conventional light bulb, and has a base that can be inserted into an AC socket that is used for conventional light bulbs. A substrate on which a light-emitting diode is mounted, an electronic circuit for turning on the light-emitting diode, a heat dissipation plate, and the like are contained inside this light bulb type LED lamp.

### Citation List

### Patent Documents

Patent Document 1: JP 2007-265892A

### Summary of Invention

### Technical Problem

Currently, all of the illumination devices that use a conventional light-emitting diode are used while being connected to an AC source. This limits the place of use and the like of the illumination devices that use a conventional light-emitting diode. Thus, it can be expected that enabling contactless power supply to an illumination device would alleviate the limitation on the place where the illumination device can be installed.

Incidentally, in the contactless power supply technology that uses electromagnetic induction, a power reception device exemplified by the aforementioned illumination devices has a power reception coil, and the power reception coil is caused to generate an induced electromotive force in accordance with an alternating magnetic field generated by a power supply device. At this time, there are cases where an eddy current due to the alternating magnetic field is generated in a conductor portion of the power reception device, causing the conductor portion to generate heat. Therefore, in order to ensure the user's safety and prevent a failure of the power reception device, the power reception device needs to be equipped with a mechanism that brings the power reception device to an emergency stop or activates a cooling mechanism if heat is detected. However, provision of such an anti-heat mechanism in the power reception device would complicate the structure of the power reception device and increase the cost thereof. Moreover, if a user carelessly places a conductor such as a metal article in the magnetic field generated by the power supply device, that conductor may generate heat without the user knowing it.

In view of the above-described problems, an object of the present invention is to suppress generation of heat by a conductor in a space in which a power reception coil is arranged in contactless power supply using electromagnetic induction.

### Solution to Problem

In order to achieve the above-described object, a power supply device of the present invention is a power supply device that supplies power to a power reception device comprising a power reception coil using electromagnetic induction, the power supply device including: a power supply coil in which "m" (where m ≥ 2) planar coils are formed by winding respective wire materials around a point on plane radially outward such that the "m" planar coils are provided in opposing relation to a space in which the power reception coil is arranged; and a driving circuit that feeds alternating currents having a common frequency to the "m" planar coils, respectively, during power supply to the power reception device, wherein a static magnetic field that is generated in the space when a direct current is fed to a (k-1)th and a kth (where 2 ≤ k ≤ m) planar coil of the power supply coil from the inner side is stronger at a position corresponding to an inner circumference of the kth planar coil than on either side relative to the position in a radial direction.

Another aspect of the present invention provides a power supply device that supplies power to a power reception device comprising a power reception coil that utilizes electromagnetic induction, the power supply device including: a power supply coil in which "m" (where m ≥ 2) planar coils that are formed by winding respective wire materials around a point on a plane radially outward such that "m" planar coils are provided in opposing relation to a space in which the power reception coil is arranged; and a driving circuit that feeds alternating currents having a common frequency to the "m" planar coils, respectively, during power supply to the power reception device, wherein a difference in length between the wire materials of a (k-1)th and a kth (where 2 ≤ k ≤ m) planar coil of the power supply coil from the inner side is less than a length of an outer circumference of the kth planar coil.

In the power supply device of the present invention, it is also possible that the "m" planar coils have the same DC resistance value.

Also, in the power supply device of the present invention, it is possible that the "m" planar coils have the same DC resistance value and the same wire material length.

Also, in the power supply device of the present invention, it is possible that the "m" planar coils are connected in parallel.

Also, it is possible that the power supply device of the present invention includes a capacitive element that is connected in series to the "m" planar coils.

Also, it is possible that the power supply device of the present invention includes a magnetic material that is provided at a distance from the power supply coil so as to cover the power supply coil from a side opposite to the space, and a nonmagnetic material that is provided so as to cover the magnetic material from the side opposite to the space.

Also, in the power supply device of the present invention, it is possible that the power supply device includes "n" (where n ≥ 2) of said power supply coils, wherein the driving circuit feeds alternating currents having the common frequency to the "n" power supply coils, respectively.

In this power supply device, it is also possible that jth (where 1 ≤ j ≤ m) planar coils of the "n" respective power supply coils from the inner side are connected in series.

A power reception device of the present invention includes a power reception coil, wherein when the power reception coil is electromagnetically coupled to the power supply coil included in the power supply device having any of the above-described configurations, the power reception device receives power from the power supply device using the power reception coil.

In this power reception device, it is also possible that inductance of the power reception coil is larger than inductance of any of the planar coils that are provided in the power supply device.

A power supply/reception device of the present invention is a power supply/reception device comprising a power supply device that supplies power by electromagnetic induction and a power reception device that receives power from the power supply device, wherein the power supply device includes: a power supply coil in which "m" (where m ≥ 2) planar coils that are formed by winding respective wire materials around a point on a plane radially outward such that the "m" planar coils are provided in opposing relation to a space in which the power reception coil is arranged; and a driving circuit feeds alternating currents having a common frequency to the "m" planar coils, respectively, during power supply to the power reception device, and a static magnetic field generated in the space when a direct current is fed to a (k-1)th and a kth (where 2 ≤ k ≤ m) planar coil of the power supply coil from the inner side is stronger at a position corresponding to an inner circumference of the kth planar coil than on either side relative to the position in a radial direction.

A power supply/reception device of the present invention is a power supply/reception device comprising a power supply device that supplies power by electromagnetic induction and a power reception device that receives power from the power supply device, wherein the power supply device includes: a power supply coil in which "m" (where m ≥ 2) planar coils are formed by winding respective wire materials around a point on a plane radially outward, the "m" planar coils opposing a space in which the power reception coil is arranged; and a driving circuit that feeds alternating currents having a common frequency to the "m" planar coils, respectively, during power supply to the power reception device, and a difference in length between the wire materials of a (k-1)th and a kth (where 2 ≤ k ≤ m) planar coil of the power supply coil from the inner side is less than a length of an outer circumference of the kth planar coil.

In the power supply/reception device of the present invention, it is also possible that the power reception device has a light-emitting circuit that causes a light-emitting body to emit light using power received from the power supply device.

According to the present invention, a plurality of regions where a magnetic field is relatively strong can be dispersedly generated as compared with conventional configurations, and thus in contactless power supply using electromagnetic induction, generation of heat by a conductor in a space in which a power reception coil is arranged can be suppressed.

### Brief Description of the Drawings

FIGS. 1A and 1B show a basic configuration of a power supply/reception device according to an embodiment of the present invention, where FIG. 1A is a conceptual diagram, and FIG. 1B is a configuration diagram.
FIG. 2 is a block diagram showing a specific configuration of a power supply/reception device according to an embodiment of the present invention.
FIGS. 3A and 3B show coils of a power supply unit, where FIG. 3A is a plan view, and FIG. 3B is a cross-sectional view taken along line I-I in FIG. 3A.
FIG. 4 is a block diagram showing the configuration of a variation of an inverter unit.
FIG. 5 is a circuit diagram showing an example of a power reception unit.
FIG. 6 is a block diagram showing a circuit with respect to which power receiving efficiency of the power reception unit was measured.
FIG. 7 is a schematic graph showing static magnetic field characteristics (two planar coils).
FIG. 8 is a graph schematically showing a relationship between the frequency of an alternating current flowing through a power supply coil and the impedance.
FIG. 9 is a graph showing frequency characteristics of current I flowing through the power supply coil when an alternating current is fed from a gate driving circuit.
FIGS. 10A and 10B are graphs showing simulation results with respect to static magnetic field characteristics (2A).
FIGS. 11A and 11B are graphs showing simulation results with respect to static magnetic field characteristics (500mA).
FIGS. 12A to 12C are diagrams showing three-dimensional distributions of static magnetic fields.
FIGS. 13A and 13B are graphs showing simulation results with respect to static magnetic field characteristics (2A).
FIGS. 14A and 14B show a power supply coil in the case where three planar coils are provided, where FIG. 14A is a plan view, and FIG. 14B is a cross-sectional view taken along line II-II in FIG. 14A.
FIGS. 15A and 15B show a power supply coil in the case where four planar coils are provided, where FIG. 15A is a plan view, and FIG. 15B is a cross-sectional view taken along line III-III in FIG. 15A.
FIGS. 16A and 16B are diagrams for explaining the electrical connection of the planar coils constituting the power supply coils.
FIG. 17 is a schematic graph showing static magnetic field characteristics (three planar coils).
FIGS. 18A to 18C are graphs showing generated static magnetic field characteristics (1A to each planar coil).
FIGS. 19A and 19B are graphs showing generated magnetic field characteristics (1A to each planar coil).
FIGS. 20A to 20F are diagrams showing three dimensional distributions of static magnetic fields.
FIGS. 21A to 21C are graphs showing generated static magnetic field characteristics (1A to power supply coil).
FIGS. 22A and 22B are graphs showing generated static magnetic field characteristics (1A to power supply coil).
FIGS. 23A and 23B are diagrams for explaining the configuration of a power supply device in the case where n = 5.
FIG. 24 is a diagram for explaining the electrical connection of five power supply coils provided in the power supply unit.
FIGS. 25A and 25B show another embodiment of the power supply coil, where FIG. 25A is a plan view, and FIG. 25B is a cross-sectional view taken along line IV-IV in FIG. 25A.
FIG. 26 is a block diagram showing the configuration of a power supply/reception device.
FIG. 27 is a block diagram showing the configuration of a power supply/reception device.
FIG. 28 is a block diagram showing the configuration of a power supply/reception device.
FIGS. 29A and 29B show a circuit that is implemented by a diode and the like which is applicable to the power supply/reception device, where FIG. 29A is a plan view, and FIG. 29B is a cross-sectional view taken along line V-V in FIG. 29A.
FIG. 30 is a block diagram of a power supply/reception device.
FIG. 31 is a block diagram showing another embodiment of an illumination device to which the power supply/reception device is applied.

### Reference Signs List

- 1, 1A, 40, 50, 60, 70: Power supply/reception device
- 10, 41, 51, 61, 71, 91: Power supply unit
- 2: Inverter portion
- 3: Capacitor
- 4, 4-1, 4-2, 4-3, 4-4, 4-5: Power supply coil
- 4A, 4B, 4C, and 4D: Planar coil
- 6: Oscillation circuit
- 6A: Clock generator
- 6B: PLL
- 6C: LC oscillator
- 6D: Variable resistor
- 7: Control circuit
- 8: Gate driving circuit
- 9: Switching transistor
- 11: Substrate
- 12, 15: Magnetic sheet
- 13, 14: Spacer
- 16: Heat dissipation plate
- 20, 42, 52, 62, 72, 92: Power reception unit
- 21: Power receiving unit
- 22, 41, 51, 61, 71: LED light-emitting portion
- 22A: Load resistor
- 23: Power reception coil
- 24, 44, 54, 64, 94: Light-emitting diode
- 25: Hood
- 26: Rectifier circuit
- 27: Smoothing capacitor
- 45: Protective diode
- 65: Resistor
- 78, 98: Storage battery
- 79: Power conversion circuit
- 81, 82: Data communication circuit
- 90: Illumination device

### Description of Embodiments

Hereinafter, embodiments of the present invention will be described in detail with reference to the drawings. In the drawings, the same or corresponding members are denoted by the same reference numerals.

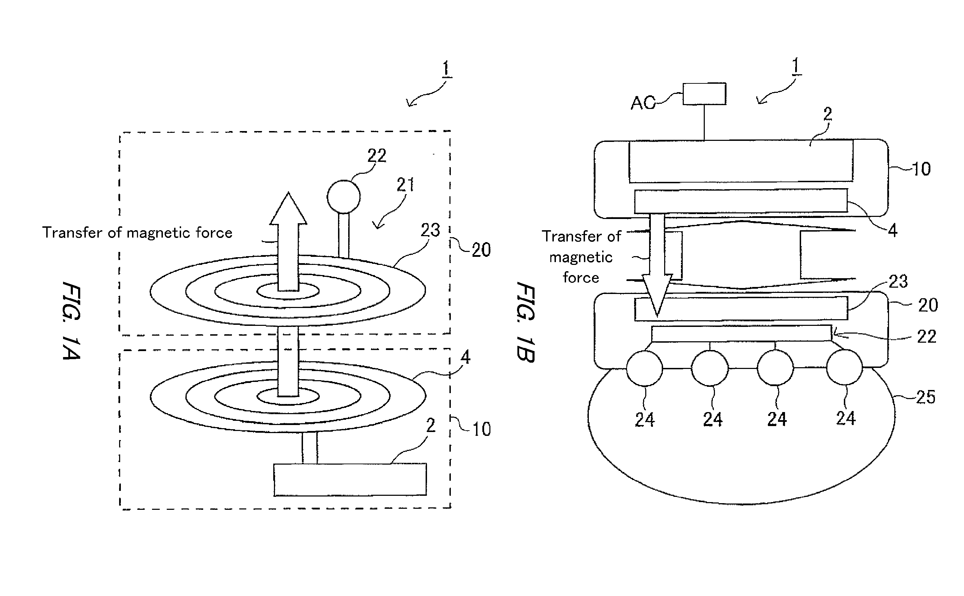

FIGS. 1A and 1B show a basic configuration of power supply/reception device 1 according to an embodiment of the present invention, where FIG. 1A is a conceptual diagram, and FIG. 1B is a configuration diagram. As shown in FIG. 1A, power supply/reception device 1 includes power supply unit 10 and power reception unit 20. Power supply unit 10 is a power supply device that supplies power to power reception unit 20 using electromagnetic induction. In power supply unit 10, AC power that is generated by inverter portion 2 is supplied to power supply coil 4. Power reception unit 20 is a power reception device that receives AC power supplied by the power supply unit 10. Power reception unit 20 includes power receiving portion 21 that includes power reception coil 23 and receives power from power supply unit 10 in a contactless manner and LED light-emitting portion 22 that emits light with power supplied from power receiving portion 21.

As shown in FIG. 1B, power supply unit 10 is connected to an AC source that is exemplified by a commercial power source. Inverter portion 2 receives DC power (DC) into which AC power from the AC source has been converted, and generates AC power to be supplied to power supply coil 4. In this case, power supply unit 10 performs an AC-to-DC-to-AC conversion. Power supply unit 10 may also be connected to the AC source via a light bulb type socket (not shown). LED light-emitting portion 22 is a light-emitting circuit that includes light-emitting diodes 24 as light-emitting bodies. LED light-emitting portion 22 may include light-emitting diodes 24 as light-emitting bodies that can be detachably attached to attachment portions (e.g., sockets), which are not shown, provided in power reception unit 20. Power reception unit 20 may also include a shade or hood 25 for reflecting and diffusing light emitted by light-emitting diodes 24, if necessary. Light-emitting diodes 24 may be turned on using the AC power that is supplied from power reception coil 23, or may be turned on using DC power that is obtained by rectifying this AC power.

With power supply/reception device 1, power can be transmitted using propagation of a magnetic force from power supply coil 4 of power supply unit 10 to power reception coil 23 of power reception unit 20, thereby causing light-emitting diodes 24 of LED light-emitting portion 22 to emit light.

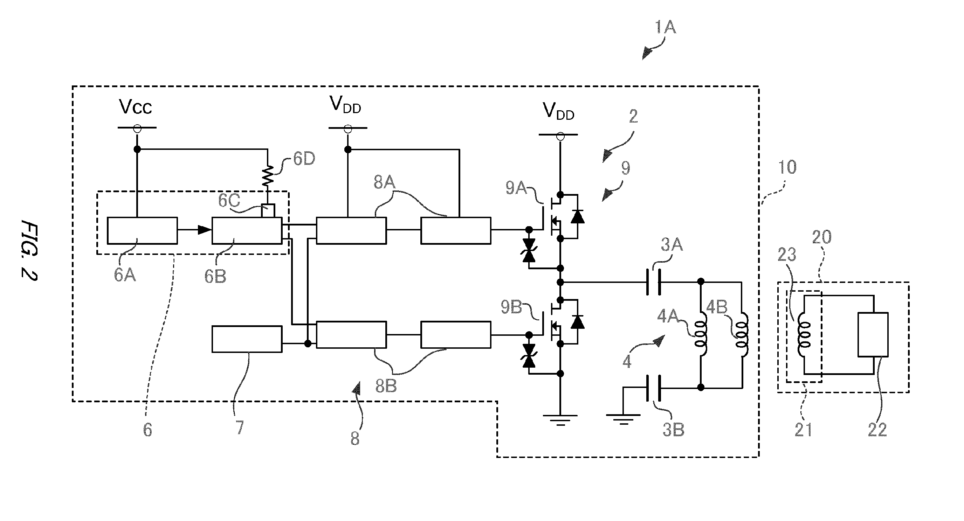

FIG. 2 is a block diagram showing a specific configuration of power supply/reception device 1A according to an embodiment of the present invention. As shown in FIG. 2, power supply/reception device 1A includes power supply unit 10 and power reception unit 20. Power supply unit 10 includes inverter portion 2, capacitor 3 that is connected to inverter portion 2, and power supply coil 4. Power reception unit 20 includes power receiving portion 21 and LED light-emitting portion 22. Power receiving portion 21 includes power reception coil 23. LED light-emitting portion 22 is operated using power that is supplied from power supply unit 10 and received by power receiving portion 21. Power supply coil 4 is a coil that is also called "primary coil", and power reception coil 23 is a coil that is also called "secondary coil".

In power supply unit 10, power supply coil 4 is configured by connecting planar coils 4A and 4B each having an inductance L1 in parallel. One end of first capacitor 3A having a capacitance C is connected to one end of the parallel circuit of planar coils 4A and 4B. The other end of the parallel circuit of planar coils 4A and 4B is connected to one end of second capacitor 3B having a capacitance C. The other end of second capacitor 3B is connected to inverter portion 2. The other end of second capacitor 3B is grounded. First capacitor 3A and second capacitor 3B correspond to capacitive elements of the present invention.

Power reception coil 23 is a planar coil having an inductance L2. Planar coils 4A and 4B in power supply unit 10 and power reception coil 23 in power reception unit 20 are electromagnetically coupled (hereinafter referred to as "electromagnetic coupling") when an alternating current is fed. It is also possible that a capacitor having a capacitance C is connected to power reception coil 23 in parallel or in series. Also, it is assumed herein that a relationship L1 < L2 is satisfied. An induced electromotive force that is generated in power reception coil 23 can be increased by making the inductance L2 of power reception coil 23 large relative to the inductance L1 of planar coils 4A and 4B.

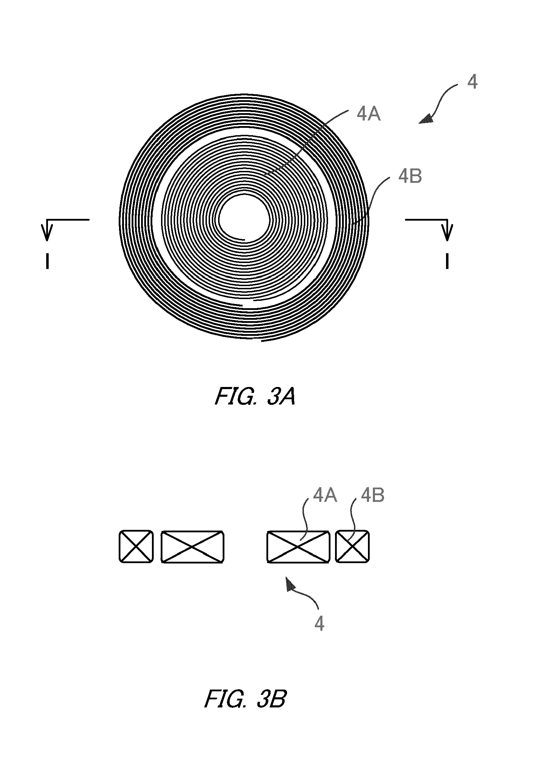

FIGS. 3A and 3B show power supply coil 4 provided in power supply unit 10, where FIG. 3A is a plan view, and FIG. 3B is a cross-sectional view taken along line I-I in FIG. 3A. As shown in FIGS. 3A and 3B, planar coils 4A and 4B provided in power supply coil 4 are arranged concentrically, with planar coil 4A being wound around the center of the concentric circles and planar coil 4B being wound around the outside of planar coil 4A. In other words, power supply coil 4 is a planar coil in which planar coils 4A and 4B formed by winding respective wire materials around the same point (here, the center point) in the same plane are arranged from the inner side to the outer side in the radial direction. The radial direction is the coil radial direction of power supply coil 4 and is also the coil radial direction of planar coils 4A and 4B.

Planar coils 4A and 4B are herein configured by winding the respective wire materials in the same direction. Also, as shown in FIGS. 3A and 3B, a gap is formed between the outer circumference of planar coil 4A and the inner circumference of planar coil 4B. Also, the wire materials of respective planar coils 4A and 4B are of the same kind and are formed so as to have the same length. Thus, the resistance values of DC resistance of respective planar coils 4A and 4B are theoretically the same. Both of planar coils 4A and 4B are composed of wire materials each obtained by twisting multiple conducting wires that are insulation coated in order to reduce the DC resistance together. A resin such as enamel or a fiber such as silk can be used as the material for the insulation coating. An example of such wiring materials is a litz wire. That is to say, planar coil 4A is a first planar coil in which a wire material is wound in a planar shape. Planar coil 4B is a second planar coil in which a wire material is wound in a planar shape so as to form an internal space whose diameter is larger than the diameter of the outer circumference of planar coil 4A.

When receiving power, power reception coil 23 of power reception unit 20 is arranged (disposed) so as to oppose planar coils 4A and 4B, which are provided in power supply unit 10, while being spaced apart therefrom by a predetermined distance. That is to say, power supply coil 4 is provided opposing a space (arrangement space of power reception coil 23) in which power reception coil 23 of power reception unit 20 is arranged (see FIG. 1A).

The following description is given with reference again to FIG. 2.

Inverter portion 2 includes oscillation circuit 6 that generates a rectangular wave or the like of the drive frequency of the inverter, control circuit 7, gate driving circuit 8, and switching transistor 9.

Oscillation circuit 6 has clock generator 6A that is configured by, for example, a crystal oscillator using a crystal unit, PLL (called "phase-locked loop") 6B, and LC oscillator 6C that is connected to the PLL. Oscillation circuit 6 is a so-called VCO (called "voltage controlled oscillator") that is controlled by PLL 6A. For example, a semiconductor variable-capacitance diode is used for capacitance C of LC oscillator 6C. The frequency of the VCO can be changed by adjusting a reverse voltage that is applied to the variable-capacitance diode. The reverse voltage that is applied to the variable-capacitance diode is supplied from power source Vcc. The reverse voltage that is applied to the variable-capacitance diode is adjusted by variable resistor 6D for varying frequency that is connected to power source Vcc.

Oscillation circuit 6 having the above-described configuration is controlled so that the frequency of the VCO becomes constant, the control being performed by comparing periodic signals of clock generator 6A and signals obtained by dividing the oscillation frequency of the VCO, and then feedback-controlling the reverse voltage that is applied to the variable-capacitance diode.

Gate driving circuit 8 is provided between oscillation circuit 6 and switching transistor 9, and amplifies the output voltage of oscillation circuit 6. Gate driving circuit 8 is configured using, for example, an integrated circuit for amplification, but may also be configured using a multi-stage amplifier circuit. Gate driving circuit 8 is also called "gate drive circuit". Gate driving circuit 8 is a driving circuit that feeds alternating currents of a common frequency to respective planar coils 4A and 4B when power supply unit 10 supplies power to power reception unit 20 using electromagnetic induction. Gate driving circuit 8 feeds, for example, an alternating current of 5 V AC and a frequency between 100 kHz and 300 kHz to power supply coil 4. Since planar coils 4A and 4B are connected in parallel to each other, gate driving circuit 8 feeds alternating currents that have a common frequency, that are in phase, and that have the same current value to respective planar coils 4A and 4B.

Note that it is also possible that the AC voltage that is used by gate driving circuit 8 to drive power supply coil 4 is other than 5 V. Also, the frequency of the alternating current that is fed to power supply coil 4 by gate driving circuit 8 is not limited to a specific frequency, but may be, for example, a frequency that is higher than the power source frequency of the previously described AC source.

Control circuit 7 controls oscillation circuit 6 and gate driving circuit 8. Control circuit 7 has means capable of varying the AC frequency that is generated by oscillation circuit 6 of inverter portion 2.

Next, the connection of gate driving circuit 8, switching transistor 9, and power supply coil 4 will be described.

As shown in FIG. 2, the drain of first N-type MOSFET 9A of switching transistor 9 is connected to power source V_{DD}, the source of first N-type MOSFET 9A is connected to the drain of second N-type MOSFET 9B, and the source of second N-type MOSFET 9B is grounded. Output signals of first and second gate driving circuits 8A and 8B are input to the respective gates of first and second N-type MOSFETs 9A and 9B. One end of first capacitor 3A is connected to a connection point between the source of first N-type MOSFET 9A and the drain of second N-type MOSFET 9B, and the other end of first capacitor 3A is connected to one end of the set of planar coils 4A and 4B that are connected in parallel. The other end of the set of planar coils 4A and 4B that are connected in parallel is connected to one end of second capacitor 3B, and the other end of second capacitor 3B is grounded.

Another connection of gate driving circuit 8, switching transistor 9, and power supply coil 4 will be described.

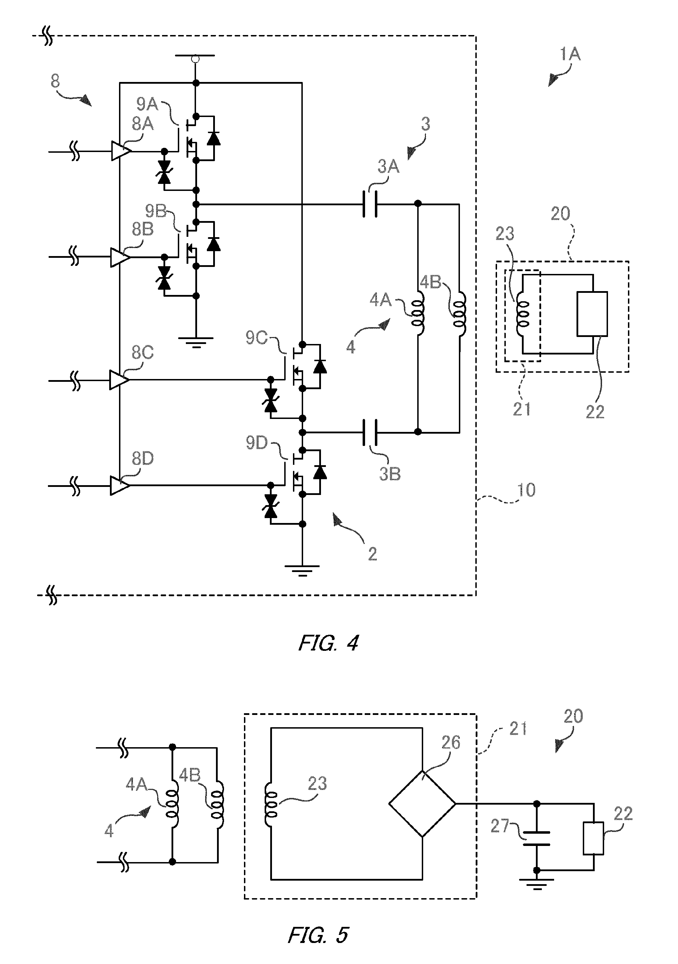

FIG. 4 is a block diagram showing the configuration of a variation of inverter portion 2. As shown in FIG. 4, switching transistor 9 includes two sets of N-type MOSFETs that are connected in series to a power source, that is, four N-type MOSFETs, and the gates of respective N-type MOSFETs 9A to 9D are driven by four gate driving circuits 8A to 8D. The set of N-type MOSFETs 9A and 9B is similar to those in FIG. 2, and the output signal of first gate driving circuit 8A is input to the gate of first N-type MOSFET 9A. The output signal of second gate driving circuit 8B is input to the gate of second N-type MOSFET 9B. In the set of N-type MOSFETs 9C and 9D, the output signal of third gate driving circuit 8C is input to the gate of third N-type MOSFET 9C, and the output signal of fourth gate driving circuit 8D is input to the gate of fourth N-type MOSFET 9D. One end of first capacitor 3A is connected to a connection point between the source of first N-type MOSFET 9A and the drain of second N-type MOSFET 9B. The other end of first capacitor 3A is connected to one end of the set of planar coils 4A and 4B that ate connected in parallel. The other and of the set of planar coils 4A and 4B that are connected in parallel is connected to one end of second capacitor 3B. The other end of second capacitor 3B is connected to a connection point between the source of third N-type MOSFET 9C and the drain of fourth N-type MOSFET.

Next, power reception unit 20 will be described.

FIG. 5 is a circuit diagram showing an example of power reception unit 20. As shown in FIG. 5, power reception unit 20 has power reception coil 23 to be electromagnetically coupled to power supply coil 4, rectifier circuit 26 that is connected to power reception coil 23, and LED light-emitting portion 22 that is connected to rectifier circuit 26. Capacitor 27 that is connected to LED light-emitting portion 22 may be, for example, an electrolytic capacitor, and serves as a capacitor for smoothing rectifier circuit 26. Rectifier circuit 26 is a rectifier circuit exemplified by a circuit that performs half-wave rectification, a circuit that performs full-wave rectification, or a bridge rectifier circuit. LED light-emitting portion 22 may be any LED light-emitting circuit that is an electronic circuit operating on alternating current or direct current. LED light-emitting portion 22 has, for example, active elements such as light-emitting diode 24, a diode other than light-emitting diode 24, and an integrated circuit; passive components such as a resistor, a capacitor, and an inductance, which are connected to these active elements; electromechanical components such as a switch; MEMSes (microelectromechanical systems); and the like. LED light-emitting portion 22 may be, for example, an illumination device, a liquid crystal display backlight, various types of display devices such as display boards that are used for advertising, indicating destination, and the like, or a pilot lamp for an apparatus.

### Example 1

An actual power supply/reception device was produced, and the efficiency of that power supply/reception device was measured. This will be specifically described as Example 1. An inverter of an output power of 5 W with a frequency of 282.9 kHz was used in power supply unit 10 of Example 3. Planar coils 4A and 4B provided in power supply coil 4 were arranged concentrically, with planar coil 4A being configured by winding a wire material around the center of the concentric circles, and planar coil 4B being configured by winding a wire material around the outside of planar coil 4A such that planar coil 4B shares the center point with planar coil 4A. A litz wire that was used for power supply coil 4 is a wire material obtained by twisting 75 polyurethane copper wires (JIS C 3202) having a diameter of 0.05 mm together.

The conditions of power supply coil 4 are given below.
Outer diameter (diameter): 50 mm ± 5 mm
Inner diameter (diameter): 10 mm ± 1 mm
Thickness: 0.7 mm ± 0.2 mm
Number of turns: 32 ± 2 (total)
Insulating material: polyurethane copper wire (JIS C 3202)

The impedance of each of planar coils 4A and 4B was measured using an impedance analyzer (manufactured by Agilent, model 4294A). In this measurement, the inductances L1 and L2 of respective planar coils 4A and 4B were both 2 µH, and the resistance values of DC resistance were 1.5 Ω. Since planar coils 4A and 4B are composed of wire materials of the same kind, having the same resistance value of DC resistance means that the planar coils have the same wire length.

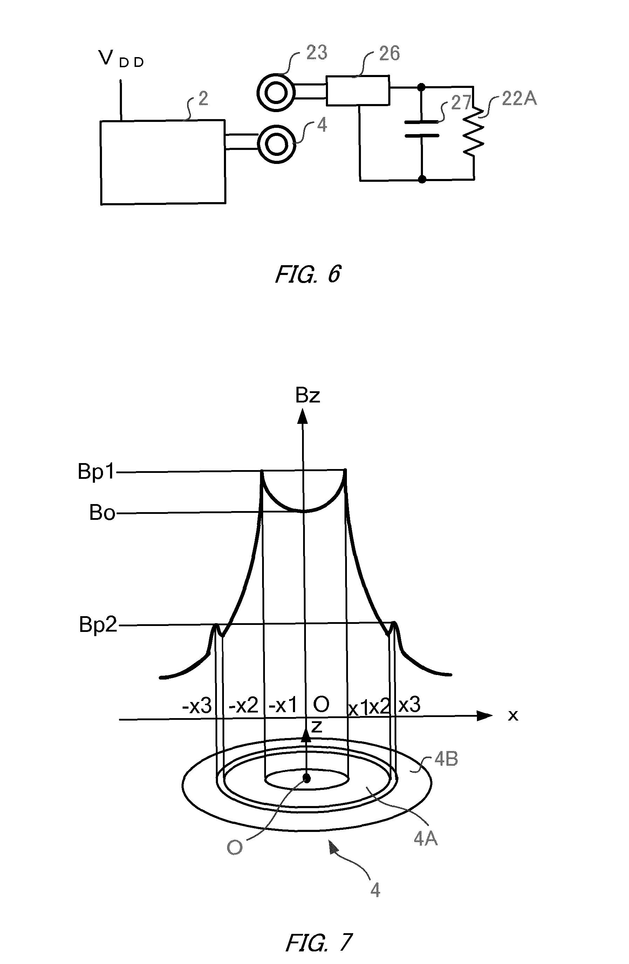

FIG. 6 is a block diagram showing a circuit with respect to which the power receiving efficiency of power reception unit 20 was measured.

As shown in FIG. 6, power reception coil 23 is arranged opposing an upper portion of power supply coil 4. Rectifier circuit 26 as in FIG. 5 and load resistor 22A are connected to power reception coil 23, the load resistor being connected in order to simulate LED light-emitting portion 22. Here, it is assumed that no capacitor is connected to power reception coil 23. Furthermore, the power receiving efficiency of a circuit of power reception unit 20 in which a load is directly connected to power reception coil 23 without rectifier circuit 26 being interposed therebetween was also measured. A capacitor having a capacitance of 27 µF and a breakdown voltage of 50 V was used as capacitor 27.

The conditions of power reception coil 23 are given below. Power reception coil 23 has a structure that is similar to the structure of planar coil 4B, which is located on the outer side in power supply coil 4. The litz wire used for power reception coil 23 was the same as that of the above-described power supply coil 4.
Outer diameter (diameter): 40 mm ± 5 mm
Inner diameter (diameter): 10 mm ± 1 mm
Thickness: 0.7 mm ± 0.2 mm
Number of turns: 28 ± 2 (total)
Insulating material: UEW polyurethane copper wire (JIS C 3202)

Table 1 shows the terminal voltage (V) of load resistor 22A, the load current (A), and the received power (W) that were measured when power was received at a position where a maximum load current flows through power reception coil 23 for each value of load resistor 22A, the value of load resistors 22A being varied from about 5 Ω to 51 Ω. Table 1 also shows the current value (A) and power consumption (W) in power supply unit 10 at that time. The efficiency is calculated by received power (w) / power consumption (W) of power supply unit × 100 (%).

As is clear from Table 1, the efficiency when the value of load resistor 22A was varied from about 5 Ω to 51 Ω was about 47.3% to 77.8%, that is to say, extremely high efficiency was achieved.

**Table 1**

| With rectifier circuit | | | | | | |
|---|---|---|---|---|---|---|
| Power characteristics of power supply unit (voltage = 5 V) | | | Power characteristics of power reception unit | | | |
| Current (A) | Power consumption (W) | Efficiency (%) | Load resistance (Ω) | Load terminal voltage (V) | Load current (A) | Received power (W) |
| 1.91 | 9.55 | 49.4 | 4.636 | 4.68 | 1.01 | 4.72 |
| 1.86 | 9.3 | 53.9 | 5.667 | 5.33 | 0.94 | 5.01 |
| 1.76 | 8.8 | 58.8 | 7.287 | 6.14 | 0.84 | 5.17 |
| 1.55 | 7.75 | 65.0 | 10.2 | 7.17 | 0.70 | 5.04 |
| 1.17 | 5.85 | 71.1 | 17 | 8.41 | 0.49 | 4.16 |
| 0.88 | 4.4 | 76.1 | 25.5 | 9.24 | 0.36 | 3.35 |
| 0.51 | 2.55 | 77.8 | 51 | 10.06 | 0.20 | 1.98 |

Table 2 shows the power receiving efficiency and the like of a circuit in which no rectifier circuit 26 is present, that is, load resistor 22A is directly connected to power reception coil 23. Without rectifier circuit 26, there is no loss due to rectifier circuit 26, and therefore the efficiency when the value of load resistor 22A was varied from about 5 Ω to 51 Ω was about 47.2% to 84.4%. Since there is no loss due to rectifier circuit 26, the efficiency was slightly improved as compared with the case where rectifier circuit 26 was provided.

**Table 2**

| Without rectifier circuit | | | |
|---|---|---|---|
| Power characteristics of power supply unit (voltage = 5 V) | | | Power reception unit |
| Current (A) | Power consumption (W) | Efficiency (%) | Load resistance (Ω) |
| 2 | 10 | 47.2 | 4.636 |
| 1.95 | 9.75 | 51.4 | 5.667 |
| 1.8 | 9 | 57.5 | 7.287 |
| 1.56 | 7.8 | 64.6 | 10.2 |
| 1.13 | 5.65 | 73.6 | 17 |
| 0.83 | 4.15 | 80.7 | 25.5 |
| 0.47 | 2.35 | 84.4 | 51 |

The description of Example 1 is ended.

Incidentally, power supply unit 10 is configured so that due to the configuration of power supply coil 4 and the driving of power supply coil 4 by gate driving circuit 8, generation of heat by a conductor that is located in the arrangement space of power reception coil 23 when power is supplied to power reception unit 20 using electromagnetic induction can be suppressed. In other words, power supply unit 10 is configured so that even if a conductor that can generate an eddy current is placed in the arrangement space of power reception coil 23, generation of heat by that conductor can be suppressed.

FIG. 7 is a graph showing the state of a static magnetic field that is generated in the arrangement space of power reception coil 23 when a direct current is fed to power supply coil 4. Hereinafter, the magnetic flux density distribution, in the radial direction of power supply coil 4, of a static magnetic field that is generated in the arrangement space of power reception coil 23, the magnetic flux density distribution being the characteristics of the static magnetic field represented by the graph shown in FIG. 7, will be called "static magnetic field characteristics". The static magnetic field characteristics indicate the characteristics in the case where no conductor such as power reception unit 20 is placed in the arrangement space of the power reception coil 23. Assuming that the permeability of the arrangement space of power reception coil 23 is constant, the higher the magnetic flux density, the higher the intensity of the magnetic field. In the following description, the xyz orthogonal coordinate system is used, where the plane extending in the radial direction of power supply coil 4 is regarded as "xy plane", and the z-axis is set in the direction of the normal to the upper surface of power supply coil 4. In the graph shown in FIG. 7, the horizontal axis indicates positions in the x-axis direction, and the origin O corresponds to the center of power supply coil 4. Positions of x = -x1, x1 correspond to respective positions on the inner circumference of planar coil 4A. Positions of x = -x2, x2 correspond to respective positions on the outer circumference of planar coil 4A. Positions of x = -x3, x3 correspond to respective positions on the inner circumference of planar coil 4B. The vertical axis indicates the intensity (here, expressed as magnetic flux density Bz) of the magnetic field in the z-axis direction at a position that is separated from the center of power supply coil 4 by a predetermined distance in the z-axis direction.

As shown in FIG. 7, according to the static magnetic field characteristics of power supply coil 4, at the two positions of x = ±x1 corresponding to the inner circumference of planar coil 4A, magnetic flux density Bz = Bp1, at which magnetic flux density Bz peaks. Magnetic flux density Bp1 is greater than magnetic flux density Bz = Bo that corresponds to the center of power supply coil 4. Also, magnetic flux density Bz gradually decreases as the distance from the positions (x = ±x1) corresponding to the inner circumference of planar coil 4A increases in a direction that is opposite to the origin O. Furthermore, the magnetic flux density Bz gradually increases as the distance from the positions (x = ±x2) corresponding to the outer circumference of planar coil 4A further increases in the direction that is opposite to the origin O. Then, at the two positions of x = ±x3 corresponding to the inner circumference of planar coil 4B, magnetic flux density Bz = Bp2, at which magnetic flux density Bz peaks. Then, magnetic flux density Bz gradually decreases as the distance from the positions (x = ±x3) corresponding to the inner circumference of planar coil 4B further increases in the direction that is opposite to the origin O.

As described above, the static magnetic field characteristics of power supply coil 4 indicate that at the two positions corresponding to the inner circumference of planar coil 4A and the two positions corresponding to the boundary portion (more specifically, the inner circumference of planar coil 4B) between planar coil 4A and planar coil 4B, the magnetic field is relatively stronger than on the two sides of each of those positions in the radial direction of power supply coil 4.

Incidentally, a conventional contactless power supply device employing a planar coil uses only one planar coil (that is to say, is equivalent to a configuration having only one of planar coils 4A and 4B described above). In such a contactless power supply device, the power receiving efficiency of the power reception device is improved using electrical resonance. Accordingly, in this contactless power supply device, a locally strong magnetic field is generated above the vicinity of the center of the planar coil. Specifically, in an area above the planar coil, the magnetic field is locally strong above the center of the planar coil, and the magnetic field weakens as the distance from the center increases in the radial direction of the planar coil. Accordingly, in this contactless power supply device, unless the position of the power reception coil is precisely set relative to the power supply coil, the power receiving efficiency of the power reception device may significantly deteriorate. Also, since this contactless power supply device supplies power to the power reception device using the magnetic field in the region where the intensity of the magnetic field is locally high, the intensity of the magnetic field needs to be made particularly high in order to supply power that is required for the operation of the power reception device. Thus, due to this locally strong magnetic field, an eddy current is easily generated in a conductor that is located in the arrangement space of the power reception coil, and consequently, this conductor easily generates heat.

In contrast, power supply unit 10 of this embodiment has power supply coil 4, and therefore regions where the magnetic field is relatively strong appear dispersedly above the inner circumference of planar coil 4A and above the inner circumference of planar coil 4B. For this reason, with power supply unit 10, the generation of a locally strong magnetic field can be suppressed as compared with the case where only one planar coil is used as the power supply coil. It is conceivable that one of the reasons why such a static magnetic field is generated is that planar coils 4A and 4B, which constitute power supply coil 4, are electromagnetically coupled to each other. It is thus conceivable that since power supply coil 4 is constituted by the two independent planar coils, namely, planar coil 4A and planar coil 4B, the regions where the magnetic field that is generated by the power supply coil is strong are generated dispersedly.

Also, with power supply unit 10, when compared with the case where only one planar coil is used as the power supply coil, even if the position of power reception coil 23 of power reception unit 20 is not precisely set relative to the position of power supply coil 4, the power receiving efficiency of the power reception unit 20 does not easily deteriorate.

It is conceivable that in order for power supply unit 10 having the above-described configuration to supply power to power reception unit 20 using electromagnetic induction while suppressing generation of heat by a conductor in the arrangement space of power reception coil 23, alternating currents having a common frequency and a small phase difference therebetween can be supplied to planar coil 4A and planar coil 4B, respectively. Here, assuming that planar coil 4A and planar coil 4B are composed of the same kind of wires, the difference in wire material length (hereinafter referred to as "wire length difference") between planar coil 4A and planar coil 4B should be minimized (desirably to zero). This is because the occurrence of a phase difference between the alternating currents respectively flowing through planar coil 4A and planar coil 4B can be suppressed by reducing the wire length difference.

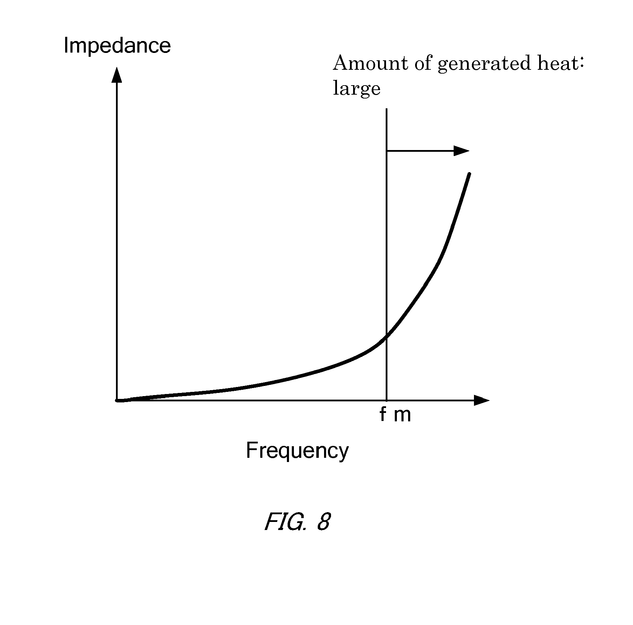

FIG. 8 is a graph schematically showing a relationship between the frequency of an alternating current flowing through planar coil 4A or planar coil 4B and the impedance. In the graph of FIG. 8, the horizontal axis indicates the frequency of the alternating current, and the vertical axis indicates the impedance. As shown in FIG. 8, as the difference in frequency between the alternating currents respectively flowing through planar coils 4A and 4B increases, the impedance increases, and if fm (e.g., 1 MHz) is exceeded, the impedance significantly rises (e.g., logarithmically increases) with respect to a change in frequency. If there is a phase difference between the alternating currents respectively flowing through planar coil 4A and planar coil 4B, this phase difference causes a harmonic component to be generated in the magnetic field in the arrangement space of power reception coil 23. Accordingly, if the phase difference between the alternating currents exceeds fm, an eddy current that is caused by this harmonic component and the resistance component of a conductor allow the conductor to easily generate heat. For this reason, in order to suppress generation of the harmonic component, in power supply unit 10, the wire length difference between planar coil 4A and planar coil 4B is set as small as possible, and furthermore, alternating currents having a common frequency and being in phase are fed to planar coils 4A and 4B that are connected in parallel. From this point of view, the acceptable wire length difference between planar coils 4A and 4B is set to be, for example, no greater than an amount that does not cause a harmonic component of 1 MHz or more to be generated when power supply unit 10 supplies power to power reception unit 20.

As an example of the measures to make the wire length difference between planar coils 4A and 4B as small as possible, the numbers of turns of the respective wire materials of planar coils 4A and 4B can be set at the numbers of turns that minimize the wire length difference between the two coils. For example, in the case where the number of turns of planar coil 4A is determined first, the number of turns of planar coil 4B can be set at the number of turns that minimizes the wire length difference between the two coils. At this time, the wire length difference between the two coils is smaller than at least the length of the outer circumference of planar coil 4B. In the case where the number of turns of planar coil 4B is determined first, the number of turns of planar coil 4A can be set at the number of turns that minimizes the wire length difference between the two coils. At this time, the wire length difference between the two coils is smaller than at least the length of the outer circumference of planar coil 4A.

Also, it is desirable that the difference between the DC resistance values of respective planar coils 4A and 4B is as small as possible and is more desirably zero. The reason for this is to suppress the occurrence of a phase difference between the alternating currents respectively flowing through planar coil 4A and planar coil 4B. The DC resistance values become substantially equivalent to the actual resistance values of the impedance at a frequency from about 200 kHz to 300 kHz, which is near the frequency of the alternating currents that are fed by gate driving circuit 8. Accordingly, when the difference between the DC resistance values of respective planar coils 4A and 4B is small, the difference between the actual resistances of the impedance at the frequency of the alternating currents fed by gate driving circuit 8 is also small. Therefore, if the difference between the DC resistance values of respective planar coils 4A and 4B is reduced, the occurrence of a phase difference between the alternating currents, which is attributed to the actual resistances, can also be suppressed.

Note that in this embodiment, planar coils 4A and 4B are composed of the wire materials of the same kind, and thus the difference in DC resistance value is substantially negligible.

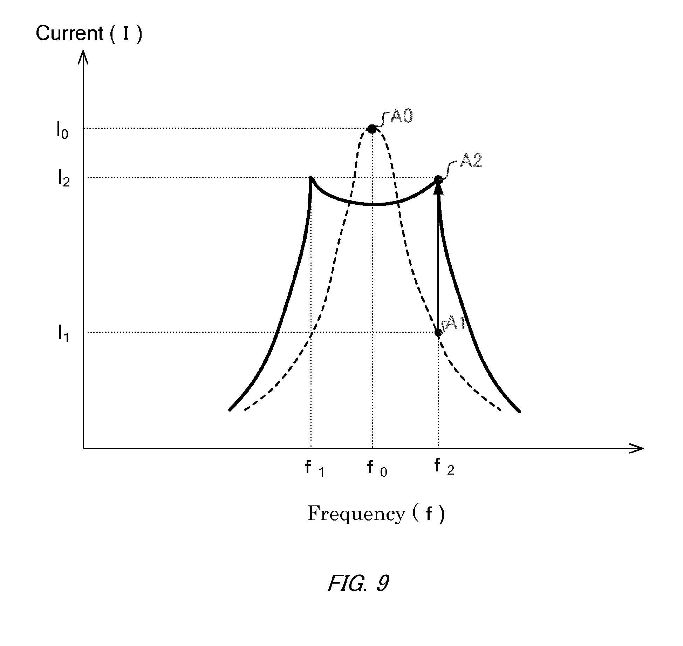

Next, FIG. 9 shows graphs schematically indicating frequency characteristics of current I that flows through planar coils 4A and 4B in the case where alternating currents are fed from gate driving circuit 8 to planar coils 4A and 4B and capacitors 3A and 3B that are used in power supply unit 10 shown in Table 1. The horizontal axis of the graphs in FIG. 9 indicates the frequency, and the vertical axis indicates the magnitude of the current I. The graph drawn with a dashed line in FIG. 9 indicates frequency characteristics in the case where no power reception unit 20 is provided (in other words, in the unloaded case). The graph drawn with a solid line in FIG. 9 indicates frequency characteristics in the case where power reception unit 20 is provided. As indicated by point A0 in FIG. 9, in the case where no power reception unit 20 is provided, the current I reaches a maximum (peak) of I₀ when the resonance frequency that is determined by planar coils 4A and 4B and capacitors 3A and 3B is f₀, and the farther the frequency is from the resonance frequency f₀, the smaller the current I is. Under such frequency characteristics, in this embodiment, gate driving circuit 8 feeds an alternating current having a frequency f₂ that is higher than the resonance frequency f₀ to power supply coil 4. Thus, at no load, as indicated by point A1 in FIG. 9, the current I flowing through power supply coil 4 is I₁ that is sufficiently smaller than I₀, so that the flow of a large current to power supply coil 4 at no load can be suppressed. In the case where power reception unit 20 is provided in this situation, as indicated by point A2 in FIG. 9, the effect of mutual inductance and the like causes the current I to increase as indicated by the solid arrow, and the current I flowing through power supply coil 4 becomes I₂. Even in this case, as shown in FIG. 9, bimodal characteristics without a sharp resonance at the resonance frequency f₀ are exhibited, and therefore Q that represents the sharpness of resonance characteristics decreases. Accordingly, the current I₂ is smaller than the peak current I₀ at the resonance frequency f₀. Therefore, if gate driving circuit 8 feeds an alternating current of a frequency (here, frequency higher than the resonance frequency f₀) that is different from the resonance frequency f₀, generation of heat in power supply unit 10 due to that current is supposed to be suppressed as compared with the case where an alternating current of the resonance frequency f₀ is fed.

Note that driving of power supply coil 4 by gate driving circuit 8 in the above-described manner is an example of specifications. Therefore, gate driving circuit 8 may also drive power supply coil 4 by feeding an alternating current of the frequency f₁, or may also drive power supply coil 4 by feeding an alternating current of a frequency other than the resonance frequency.

### Example 2

Hereinafter, a simulation that demonstrates generation of static magnetic field characteristics as described above will be specifically described as Example 2. In Example 2, the simulation is performed with power supply coil 4 designed in the following manner. Litz wires that are used as planar coils 4A and 4B are obtained by twisting together 54 polyurethane copper wires (JIS C 3202) having a wire diameter of 0.05 mmΦ, a resistivity of 0.13 mΩ/mm, and a wire material coating thickness of 0.001 mm.

### (Conditions of planar coil 4A)

Wire length: 2238.38 mm
Outer diameter (diameter): 41.0 mm ± 0.30 mm
(radius 20.5 mm ± 0.20 mm)
Inner diameter (diameter): 16.00 mm ± 0.30 mm
(radius 8.00 mm ± 0.20 mm)
Resistance value: 290.99 mΩ
Number of turns: 25

### (Conditions of planar coil 4B)

Wire length: 2199.11 mm
Outer diameter (diameter): 57.00 mm ± 0.30 mm
(radius 28.50 mm ± 0.20 mm)
Inner diameter (diameter): 43.00 mm ± 0.30 mm
(radius 21.50 mm ± 0.20 mm)
Resistance value: 285.88 mΩ
Number of turns: 14
Average distance between planar coils 4A and 4B: 1.00 mm (this gap corresponds to two turns.)
Wire length difference between planar coils 4A and 4B: 39.27 mm
Difference in resistance between planar coils 4A and 4B: 5.11 mΩ

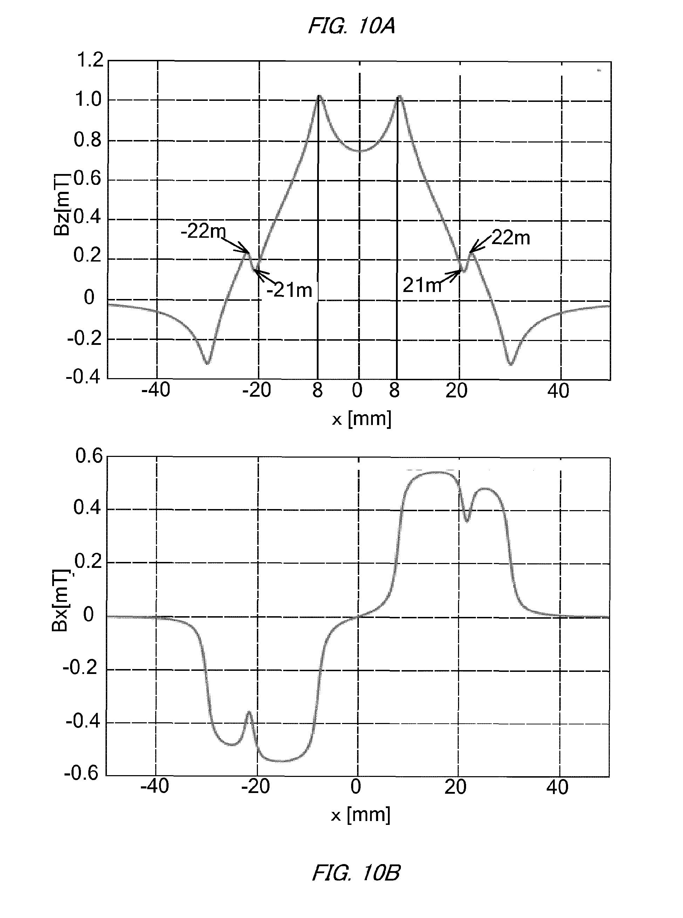

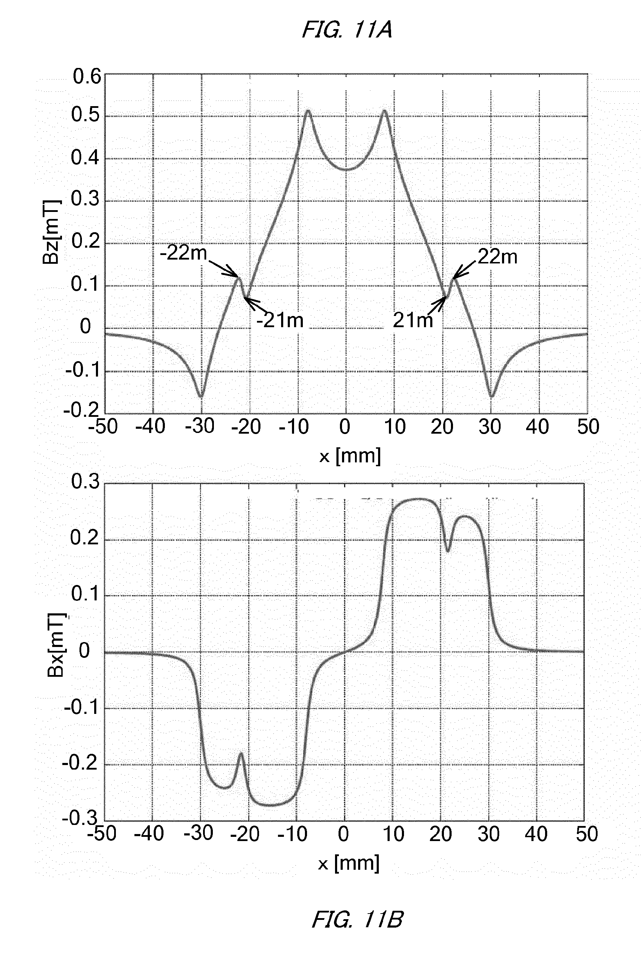

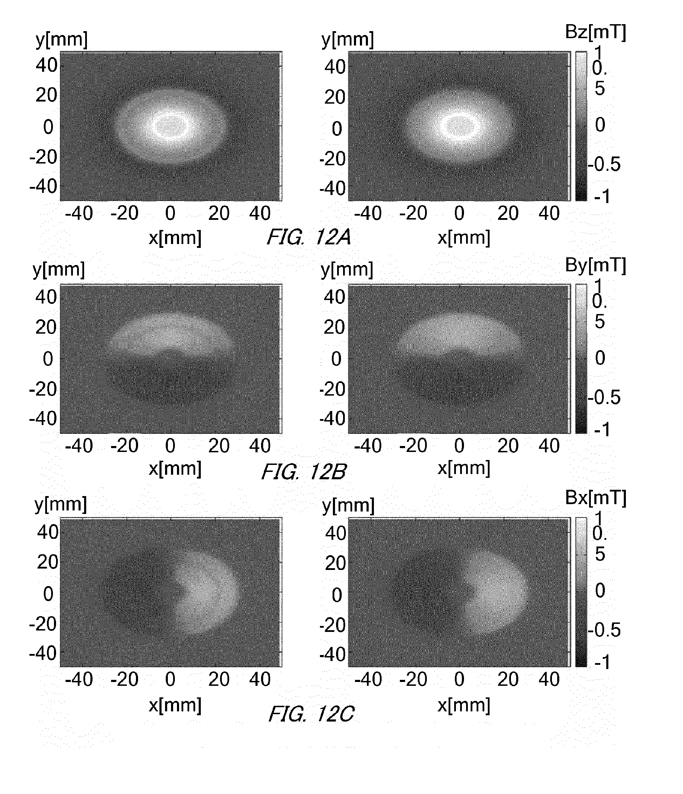

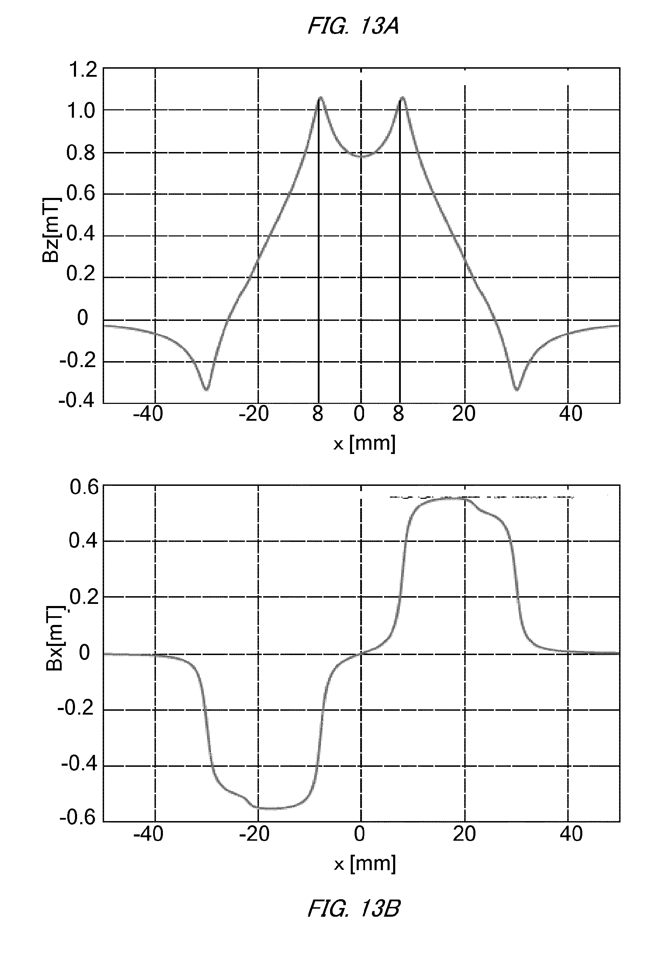

FIGS. 10 to 12 are diagrams showing simulation results demonstrating generation of static magnetic field characteristics in power supply coil 4. FIGS. 13A and 13B are graphs showing simulation results of static magnetic field characteristics in the case where only one planar coil is used as in a conventional contactless power supply device. In the simulation of static magnetic field characteristics, a direct current of 2 A (in the cases of FIGS. 10 and 13) or 500 mA (in the case of FIG. 12) is fed to each of planar coils 4A and 4B, and in each case, the magnetic flux density at a position 1 mm from power supply coil 4 in the z-axis direction is obtained using the Biot-Savart law. FIGS. 10A, 11A, and 13A are graphs indicating the magnetic flux density [mT] in the z-axis direction, and FIGS. 10B, 11B, and 13B are graphs indicating the magnetic flux density [mT] in the x-axis direction. FIGS. 12A to 12C are diagrams showing three-dimensional distributions of the static magnetic field characteristics shown in FIGS. 10A and 10B. In FIGS. 12A to 12C, diagrams in the left column show the results of the case where power supply coil 4 is used, and diagrams in the right column show the results of the case where only one planar coil is used as in a conventional device. FIGS. 12A, 12B, and 12C show the magnetic field intensity in the z-axis direction, the y-axis direction, and the x-axis direction, respectively. From these simulation results, it is confirmed that in power supply unit 10, the manner in which a static magnetic field is generated is different from that of the case (see FIG. 13) where only one planar coil is used as in a conventional device, and the inventor's findings about the intensity of the static magnetic field at positions (x ≈ ±22 mm) corresponding to the inner circumference of planar coil 4B are correct. As shown in FIG. 13, in the case where only one planar coil is used, the tendency of a relatively strong static magnetic field to occur dispersedly in a plurality of regions is not observed, and the magnetic flux density is high only in the vicinity of the center of the planar coil. From this observation, it can be considered that the provision of a gap between the outer circumference of planar coil 4A and the inner circumference of planar coil 4B also contributes to the generation of the static magnetic field characteristics shown in FIGS. 10 to 12.

Also, a comparison between FIGS. 10 and 12 shows that the smaller the direct current flowing through power supply coil 4, the smaller the difference between the magnetic flux density Bz at a position corresponding to the inner circumference of planar coil 4A and the magnetic flux density Bz at a position corresponding to the inner circumference of planar coil 4B. That is to say, the smaller the direct current flowing through power supply coil 4, the flatter the static magnetic field characteristics, and the more the variation in magnetic flux density depending on the position in the radial direction of power supply coil 4 can be suppressed.

Incidentally, although the wire length difference is about 39 mm and the difference in DC resistance value is about 5.1 mΩ in this simulation, it is considered that even if the wire length difference and the difference in DC resistance value more or less increase, the amount of heat generated by a conductor in the arrangement space of power reception coil 23 does not dramatically increase, and the static magnetic field characteristics do not significantly change. Accordingly, in power supply coil 4, it is expected that if at least the wire length difference is less than the length of the outer circumference of planar coil 4B, generation of heat by a conductor in the arrangement space of power reception coil 23 is suppressed more than in the case where only one planar coil is used as in a conventional device. Also, for example, even when the resistance values of DC resistance of planar coils 4A and 4B differ from each other, it is considered that although the intensity of the magnetic fields generated by respective planar coils varies, the static magnetic field characteristics having the above-described tendency are generated due to electromagnetic coupling occurring between planar coil 4A and planar coil 4B.

The description of Example 2 is ended.

As described above, in power supply unit 10, power supply coil 4 is constituted by planar coils 4A and 4B, and the static magnetic field characteristics in the radial direction of power supply coil 4 are set such that the magnetic field intensity is relatively high at the inner circumference of planar coil 4B. Thus, in the arrangement space of power reception coil 23, generation of heat by a conductor due to an eddy current can be suppressed. It is considered that if power reception unit 20 or a conductor such as a metal article is placed in the arrangement space of power reception coil 23, the magnetic field that is generated by power supply coil 4 also changes, but power supply unit 10 causes a plurality of regions where the magnetic field is locally strong to be generated dispersedly, thereby making it possible to suppress generation of heat by the conductor due to an eddy current that is caused by generation of a locally strong magnetic field while stably supplying power to power reception unit 20. Moreover, the use of power supply unit 10 makes it possible to prevent a conductor (e.g., conductor of power reception unit 20) from reaching a high temperature due to the magnetic field generated by power supply coil 4, and thus it is possible to suppress complication and an increase in the cost of the device configuration due to, for example, a cooling mechanism or an anti-heat mechanism for performing an emergency stop when detecting heat, to suppress the possibility of a failure of the device due to heat, and also to ensure the user's safety against heat.

### Variations

The present invention can be implemented in a different form from the foregoing embodiments. For example, the present invention can also be implemented in various forms as described below. Also, variations described below may be combined with one another as appropriate.
(1) In the foregoing embodiments, power supply unit 10 has first capacitor 3A and second capacitor 3B; however, power supply unit 10 may have only one of these capacitors, or a configuration having neither of the capacitors is possible. First capacitor 3A and second capacitor 3B are used to adjust the characteristics of power supply coil 4 (in other words, to adjust the magnetic field that is generated in the arrangement space of power reception coil 23), and if this adjustment is unnecessary, first capacitor 3A and second capacitor 3B are not needed. For example, in the case where power supply unit 10 supplies power to power reception unit 20 by stepping down the voltage, first capacitor 3A and second capacitor 3B are not needed as well.
(2) In the foregoing embodiments, planar coils 4A and 4B of power supply coil 4 are arranged concentrically; however, the centers of the two coils may also be offset from each other. Also, the outer circumferences of planar coils 4A and 4B are not required to be circular, and may be, for example, elliptical or may be polygonal such as hexagonal or octagonal, and the shapes thereof are not limited to a particular shape as long as those planar coils are recognized as planar coils.
(3) In the foregoing embodiments, power supply coil 4 is constituted by the two planar coils, namely, planar coils 4A and 4B; however, power supply coil 4 may also be constituted by three or more planar coils. Even in this case, it is sufficient if power supply coil 4 is configured such that a plurality of planar coils constituting power supply coil 4 are arranged in the same plane, and in the internal space of one of the planar coils, the other planar coils are located. Also, in power supply coil 4, it is favorable that a gap (e.g., gap having an average width corresponding to two or more turns) is provided between the planar coils to an extent that the magnetic field becomes relatively strong at positions corresponding to the respective inner circumferences of the planar coils.

Next, a case where power supply coil 4 is constituted by three or more planar coils will be described in detail.

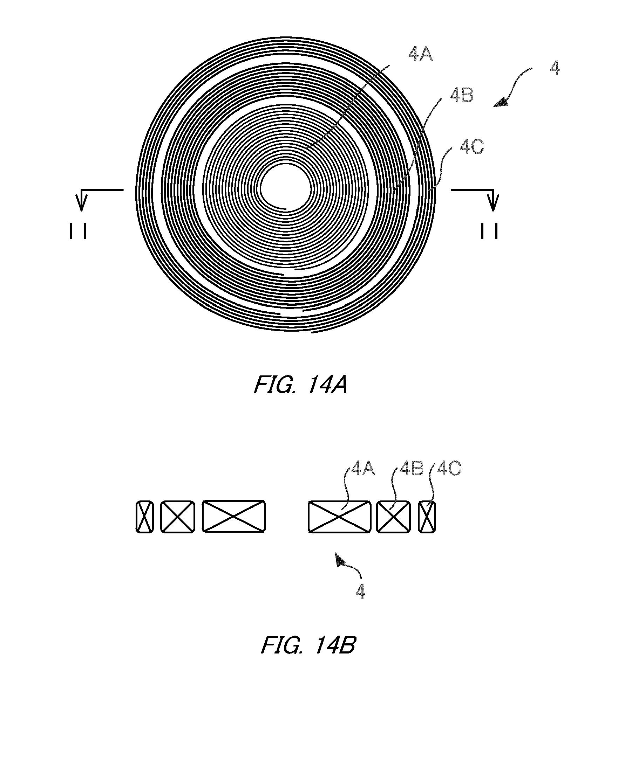

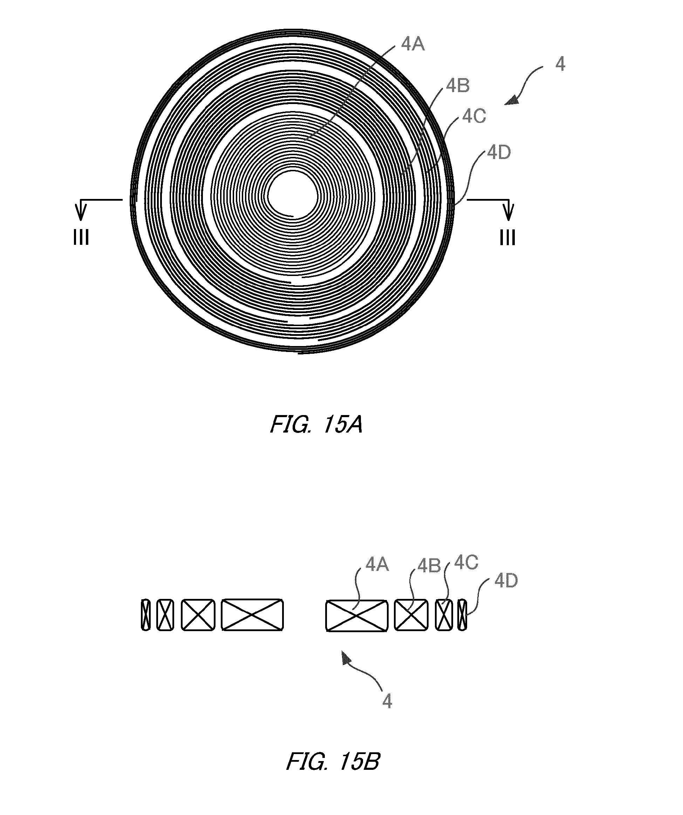

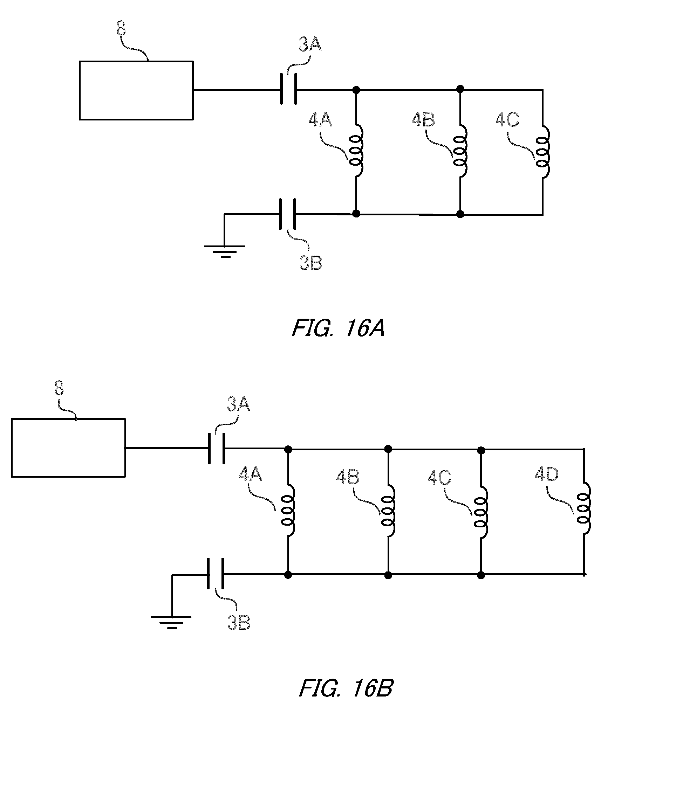

FIGS. 14A and 14B show power supply coil 4 in the case where three planar coils are provided, where FIG. 14A is a plan view, and FIG. 14B is a cross-sectional view taken along line II-II in FIG. 14A. FIGS. 15A and 15B show power supply coil 4 in the case where four planar coils are provided, where FIG. 15A is a plan view, and FIG. 15B is a cross-sectional view taken along line III-III in FIG. 15A. FIGS. 16A and 16B are diagrams for explaining the electrical connection of the planar coils constituting power supply coil 4, where FIG. 16A shows the case where the number of planar coils is 3, and FIG. 16B shows the case where the number of planar coils is 4. In power supply unit 10 of this variation, the circuit configuration excluding the portions shown in FIGS. 16A and 16B can be the same as the circuit configuration that is described in the foregoing embodiments.

First, the configuration of power supply coil 4 in the case where three planar coils are provided will be described. As shown in FIGS. 14, power supply unit 10 has planar coils 4A, 4B, and 4C that are arranged concentrically. The configurations of planar coils 4A and 4B are the same as the configurations in the foregoing embodiments, but in power supply coil 4 here, planar coil 4C is further provided by winding a wire material around the outside of planar coil 4B. Also, a gap is formed between the outer circumference of planar coil 4B and the inner circumference of planar coil 4C, and planar coil 4C is wound in the same direction as planar coils 4A and 4B. Also, as shown in FIG. 16A, power supply coil 4 has a configuration in which planar coils 4A, 4B, and 4C each having an inductance L1 are connected in parallel. Also, in power supply coil 4, one end of first capacitor 3A is connected to one end of the set of planar coils 4A, 4B, and 4C that are connected in parallel. The other end of the set of planar coils 4A, 4B, and 4C that are connected in parallel is connected to one end of second capacitor 3B.

Here, the wire materials of respective planar coils 4A, 4B, and 4C are of the same kind and are formed to have the same length. Thus, planar coils 4A, 4B, and 4C theoretically have the same resistance value of DC resistance. The reason why the wire material length and the resistance value of DC resistance of planar coil 4C are set to be the same as those of planar coils 4A and 4B is the same as the reason previously described in the foregoing embodiments. However, for the same reason as that of the foregoing embodiments, the difference in wire material length between planar coil 4C and planar coil 4B is only required to be less than the length of the outer circumference of planar coil 4C.

In this manner, planar coils 4A, 4B, and 4C are connected in parallel to one another, and thus gate driving circuit 8 feeds alternating currents that have a common frequency, that are in phase, and that have the same current value to respective planar coils 4A, 4B, and 4C.

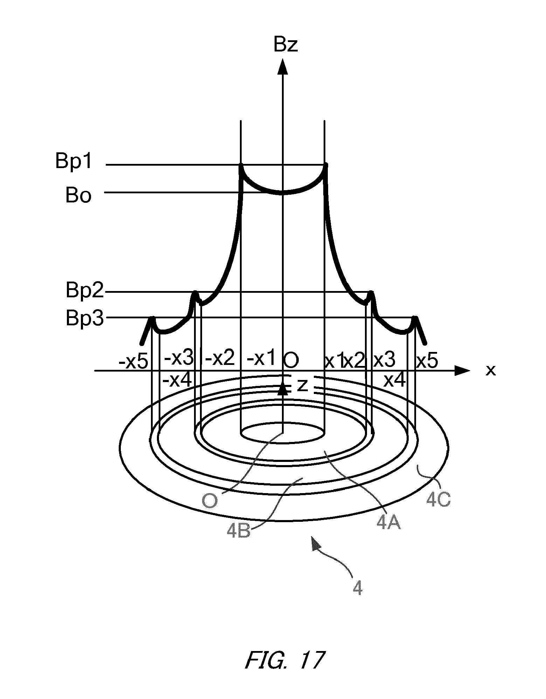

FIG. 17 is a graph showing static magnetic field characteristics in power supply coil 4 that is constituted by planar coils 4A, 4B, and 4C. The horizontal and vertical axes of the graph shown in FIG. 17 are the same as the horizontal and vertical axes, respectively, of the graph shown in FIG. 7. As shown in FIG. 17, with regard to the static magnetic field characteristics of power supply coil 4 of this variation, at two positions of x = ±x5 corresponding to the inner circumference of planar coil 4C, magnetic flux density Bz = Bp3, and this magnetic flux density Bz is higher than the magnetic flux density on the two sides of each of those two positions (for example, at positions of x = ±x4 corresponding to the outer circumference of planar coil 4B). Also, the magnetic flux density Bz gradually decreases as the distance from the positions of x = ±x5, which correspond to the inner circumference of planar coil 4C, increases in the direction opposite to the origin O. It is considered that such static magnetic field characteristics are generated due to planar coil 4C being electromagnetically coupled to planar coil 4B. However, there is also a possibility that planar coil 4C is also electromagnetically coupled to planar coil 4A.

As described above, with regard to the static magnetic field characteristics that are generated by power supply coil 4 in the case where three planar coils are provided, not only at the two positions corresponding to the inner circumference of planar coil 4A and the two positions corresponding to the boundary portion between planar coil 4A and planar coil 4B, but also at the two positions corresponding to the boundary portion between planar coil 4B and planar coil 4C, the magnetic field is relatively strong as compared with that on the two sides of each of those positions in the radial direction of power supply coil 4. Thus, this power supply coil 4 can cause regions where the magnetic field is relatively strong to be generated dispersedly above the inner circumference of planar coil 4A, above the inner circumference of planar coil 4B, and above the inner circumference of planar coil 4C. Accordingly, with power supply unit 10 of this embodiment, even more regions where the magnetic field is relatively strong can be dispersedly generated, and thus generation of a locally strong magnetic field can be suppressed.

For these reasons, even in the case where four planar coils are provided, power supply coil 4 can be configured similarly. As shown in FIGS. 15, power supply unit 10 has planar coils 4A, 4B, 4C, and 4D that are arranged concentrically. The configuration of planar coils 4A, 4B, and 4C is the same as that in the case where three planar coils are provided, and in power supply coil 4 here, planar coil 4D is further provided by winding a wire material around the outside of planar coil 4C. Also, a gap is formed between the outer circumference of planar coil 4C and the inner circumference of planar coil 4D, and planar coil 4D is wound in the same direction as planar coils 4A, 4B, and 4C. Also, as shown in FIG. 16B, power supply coil 4 has a configuration in which planar coils 4A, 4B, 4C, and 4D each having an inductance L1 are connected in parallel to one another. Also, in power supply coil 4, one end of first capacitor 3A is connected to one end of the set of planar coils 4A, 4B, 4C, and 4D that are connected in parallel. The other end of the set of planar coils 4A, 4B, 4C, and 4D that are connected in parallel is connected to one end of second capacitor 3B. Here, the wire materials of respective planar coils 4A, 4B, 4C, and 4D are of the same kind and are formed to have the same length, as well. Thus, planar coils 4A, 4B, 4C, and 4D theoretically have the same resistance value of DC resistance. The reason why the length and the resistance value of DC resistance of planar coil 4D are set to be the same as those of planar coils 4A, 4B, and 4C is the same as the reason in the foregoing embodiments. However, for the same reason as that in the foregoing embodiments, the difference in wire material length between planar coil 4D and planar coil 4C is only required to be less than the length of the outer circumference of planar coil 4D.

With power supply coil 4 having four planar coils as described above, still more regions where the magnetic field is relatively strong can be dispersedly generated, and thus generation of a locally strong magnetic field can be suppressed.

Based on the foregoing grounds, it is clear that the number of planar coils constituting power supply coil 4 may also be five or more. When the number of planar coils constituting power supply coil 4 is generalized and expressed as "m" (where m ≥ 2), it is sufficient if the configuration of power supply coil 4 satisfies the following conditions. First, power supply coil 4 has a configuration in which "m" planar coils that are formed by winding respective wire materials around the same point (e.g., the center of concentric circles) in the same plane are arranged from the inner side to the outer side in the radial direction. Also, in power supply coil 4, the "m" planar coils are provided opposing the space in which power reception coil 23 is arranged. Then, with respect to a static magnetic field that is generated in the arrangement space of power reception coil 23 when a direct current is fed to a (k-1)th and a kth planar coil (where 2 ≤ k ≤ m) of power supply coil 4 from the inner side, it is sufficient if the intensity of the static magnetic field at a position corresponding to the inner circumference of the kth planar coil from the inner side is higher than that on the two sides of this position. In order to achieve these static magnetic field characteristics in power supply coil 4, based on the inventor's findings described above, it can be considered that it is sufficient if the difference in wire material length between the (k-1)th and kth planar coils from the inner side is less than the length of the outer circumference of the kth planar coil. It is considered that at this time, a part or all of the "m" planar coils constituting power supply coil 4 are electromagnetically coupled. Then, to supply power to power reception unit 20, gate driving circuit 8 is only required to feed alternating currents of a common frequency to the "m" planar coils, respectively.

It is considered that the larger the number of planar coils constituting power supply coil 4, the more regions where the magnetic field is relatively strong are dispersedly generated in the arrangement space of power reception coil 23, and the flatter the static magnetic field characteristics, and therefore it can be expected that the effect of suppressing generation of heat by a conductor that is located in the arrangement space of power reception coil 23 is enhanced.

### Example 3

Hereinafter, a simulation that demonstrates generation of static magnetic field characteristics described above will be specifically described as Example 3. In Example 3, the simulation is performed by setting the conditions of power supply coil 4 as given in Table 3 below. Also, the simulation is performed using two power supply coils 4, that is, power supply coil 4 (type A) in which an average distance "d" between the planar coils is 1 mm and power supply coil 4 (type B) in which the average distance "d" between the planar coils is 2 mm.

**Table 3**

| | Planar coil (sign) | Inner diameter (radius [mm]) | Inner diameter (diameter [mm]) | Outer diameter (radius [mm]) | Outer diameter (diameter [mm]) | Number of turns |
|---|---|---|---|---|---|---|
| Type A (d = 1 mm) | 4A | 5 | 10 | 17.5 | 35 | 25 |
| | 4B | 18.5 | 37 | 25 | 50 | 13 |
| | 4C | 26 | 52 | 31 | 62 | 10 |
| | 4D | 32 | 64 | 36.1 | 72.2 | 8.2 |
| Type B (d = 2 mm) | 4A | 5 | 10 | 17.5 | 35 | 25 |
| | 4B | 19.5 | 39 | 25.7 | 51.4 | 12.4 |
| | 4C | 27.7 | 55.4 | 32.4 | 64.8 | 9.8 |
| | 4D | 34.4 | 68.8 | 38.3 | 76.6 | 7.8 |

In Example 3, power supply coil 4 with m = 2 is constituted by planar coils 4A and 4B. Power supply coil 4 with m = 3 is constituted by planar coils 4A, 4B, and 4C. Power supply coil 4 with m = 4 is constituted by planar coils 4A, 4B, 4C, and 4D. Also, in Example 3, the magnetic flux density Bz in the z-axis direction at a position of z = 1mm is calculated, and the currents flowing through the respective planar coils are set at 1 A. Since the currents flowing through the respective planar coils are set at 1 A and are uniform, it can be considered that the DC resistance values take a certain uniform value.

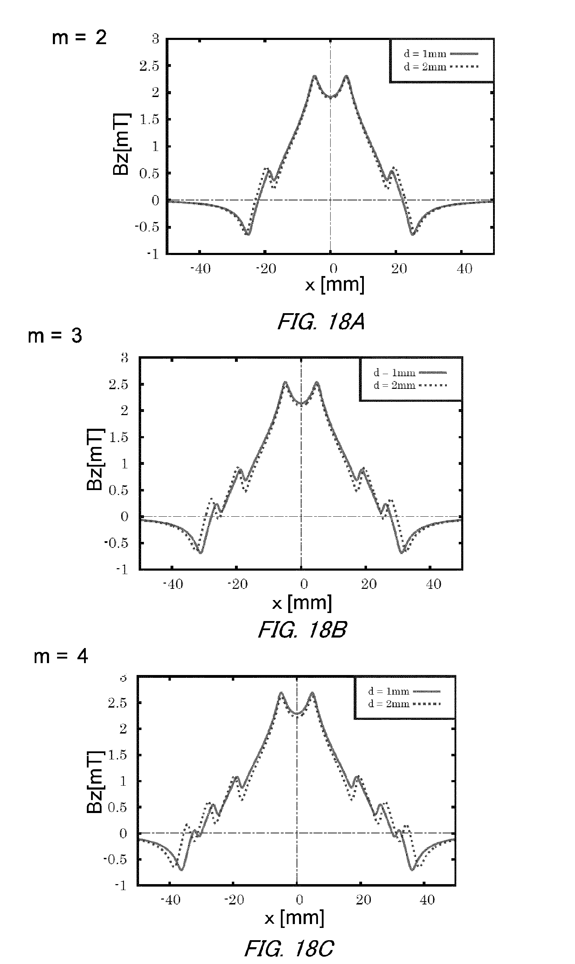

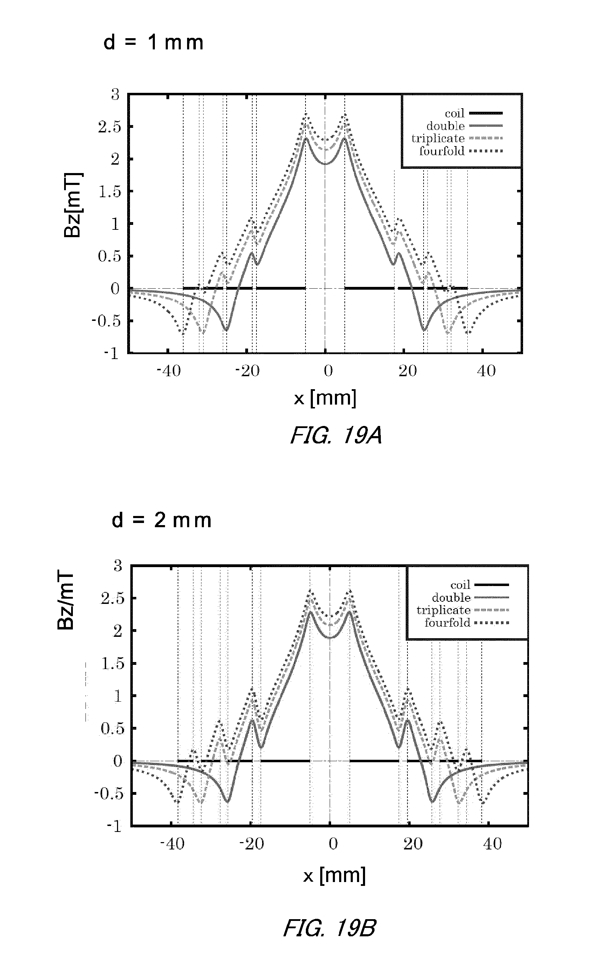

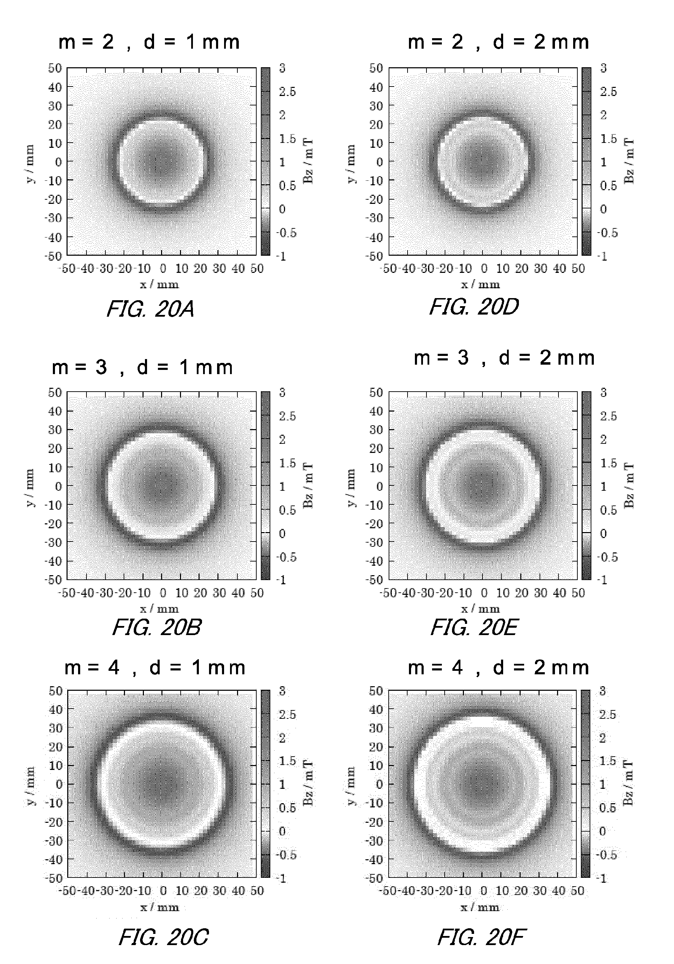

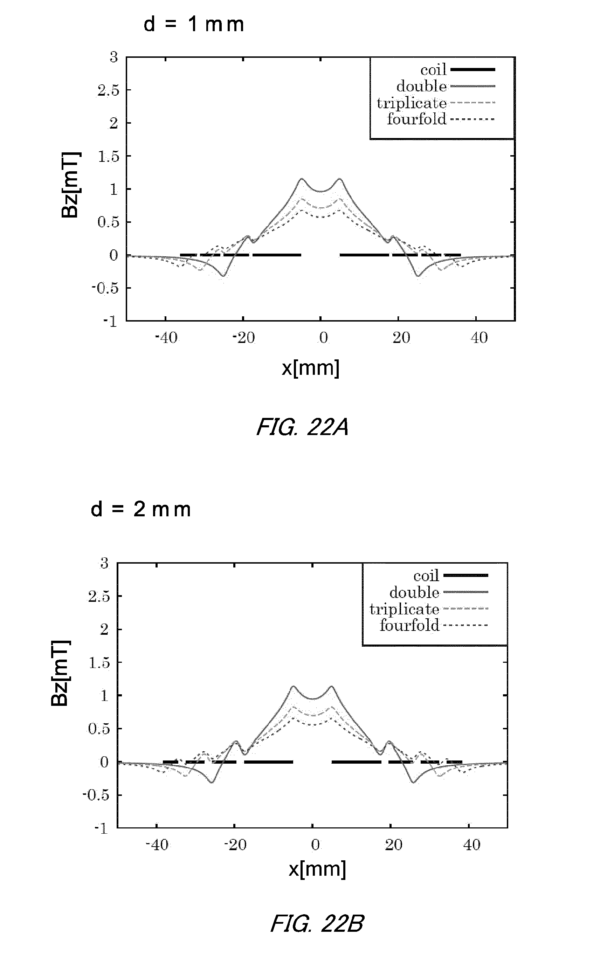

FIGS. 18A to 18C are graphs showing generated static magnetic field characteristics, where FIG. 18A corresponds to power supply coil 4 with m = 2, FIG. 18B corresponds to power supply coil 4 with m = 3, and FIG. 18C corresponds to power supply coil 4 with m = 4. FIG. 19A is a diagram collectively showing the graphs showing the results with respect to power supply coil 4 of type A (d = 1 mm) of the graphs shown in FIGS. 18A to 18C, and FIG. 19B is a diagram collectively showing the graphs showing the results with respect to power supply coil 4 of type B (d = 2 mm) of the graphs shown in FIGS. 18A to 18C. In FIGS. 18 and 19, the horizontal and vertical axes of the graphs are the same as the horizontal and vertical axes, respectively, of the graph shown in FIG. 7. Also, in FIGS. 19, the positions at which the planar coils are present are indicated by thick lines (corresponding to "coil" in the legends to the graphs of FIGS. 19). Also, in the legends to the graphs of FIGS. 19 and 22, which will be described later, "double" refers to power supply coil 4 with m = 2, "triplicate" refers to power supply coil 4 with m = 3, and " fourfold" refers to power supply coil 4 with m = 4. FIGS. 20A to 20F are diagrams showing three-dimensional distributions of the static magnetic field characteristics corresponding to FIGS. 18 and 19. FIGS. 20A to 20F show the magnetic flux density Bz in the z-axis direction in the cases where power supply coils 4 with (A) m = 2, d = 1mm, (B) m = 3, d = 1 mm, (C) m = 4, d = 1 mm, (D) m = 2, d = 2 mm, (E) m = 3, d = 2 mm, and (F) m = 4, d = 2 mm are used.

As can be seen from FIGS. 18 to 20, it is confirmed that the larger the number of planar coils constituting power supply coil 4, the larger the amount of increase in the intensity of the magnetic field in a region that is away from the center of power supply coil 4 relative to the amount of increase in the intensity of the magnetic field at the center of power supply coil 4. That is to say, it is confirmed that the larger the number of planar coils constituting power supply coil 4, the wider the range in which regions where the magnetic field is relatively strong are dispersedly generated.

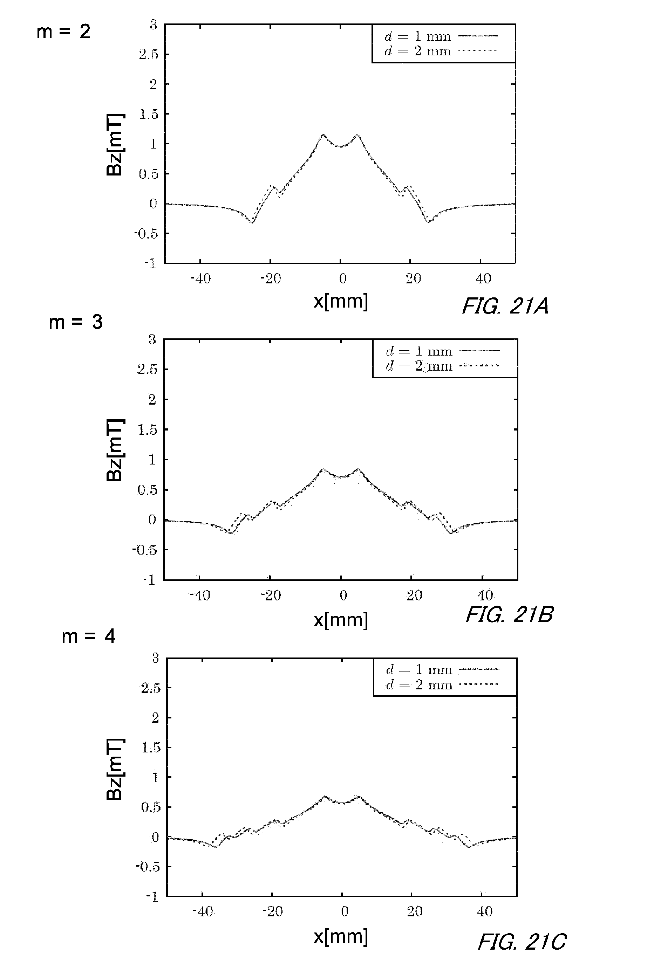

FIGS. 21A to 21C are graphs showing simulation results in the case where the current flowing through power supply coil 4 is set at 1 A. In this case, the larger the number of planar coils constituting power supply coil 4, the smaller the current flowing through each planar coil. In FIGS. 21, FIG. 21A corresponds to power supply coil 4 with m = 2, FIG. 21B corresponds to power supply coil 4 with m = 3, and FIG. 21C corresponds to power supply coil 4 with m = 4. FIG. 22A is a diagram collectively showing the graphs showing the results with respect to power supply coil 4 of type A (d = 1 mm) of the graphs shown in FIGS. 21A to 21C, and FIG. 22B is a diagram collectively showing the graphs showing the results with respect to power supply coil 4 of type B (d = 2 mm) of the graphs shown in FIGS. 20A to 20C. In FIGS. 21 and 22, the horizontal and vertical axes are the same as the horizontal and vertical axes, respectively, of the graphs shown in FIGS. 18 and 19. From these simulation results, it can be confirmed that even if the total current flowing through power supply coil 4 is set uniform irrespective of the number of planar coils, the larger the number of planar coils constituting power supply coil 4, the flatter the static magnetic field characteristics, and the more widely the regions where the magnetic field is relatively strong are dispersedly generated.
(4) In the foregoing embodiments, a configuration in which power supply unit 10 has only one power supply coil 4 is described; however, power supply unit 10 may also include two or more power supply coils 4. That is to say, power supply unit 10 may also include "n" (where n ≥ 2) power supply coils 4. In this case, gate driving circuit 8 feeds alternating currents having a common frequency to "n" power supply coils 4, respectively.

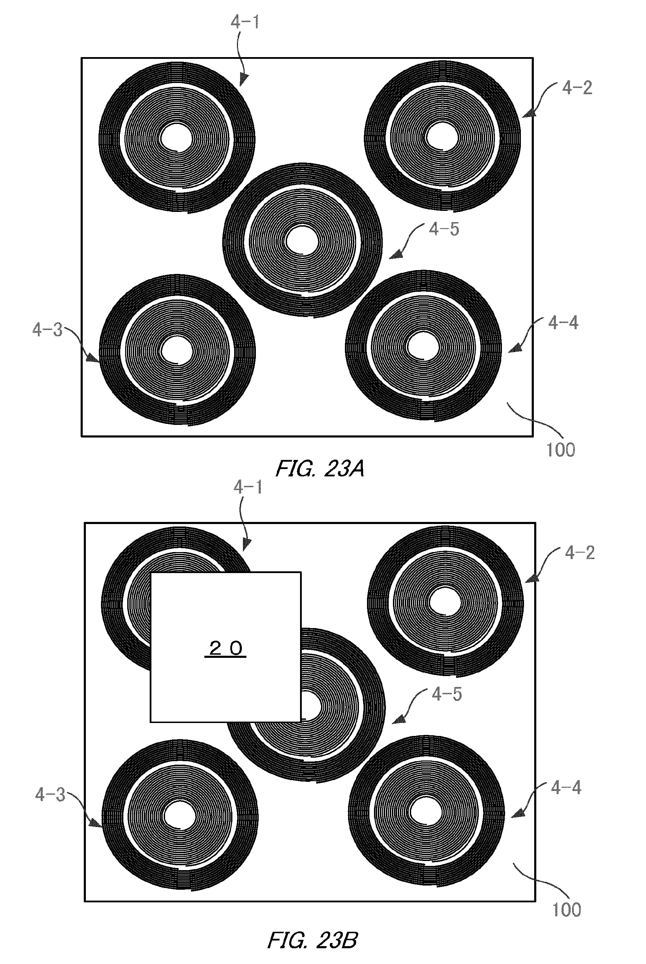

FIGS. 23A and 23B are diagrams for explaining the configuration of power supply unit 10 in the case where n = 5. As shown in FIG. 23A, in this power supply unit 10, five power supply coils 4 are arranged in the same plane. Here, in order to distinguish each of the five power supply coils 4, the power supply coils 4 are differently denoted by respective reference numerals "4-1", "4-2", "4-3", "4-4", and "4-5". Also, stage 100 on which power reception unit 20 is to be placed is provided on the side of the arrangement space in which power reception coil 23 is arranged so as to oppose power supply coils 4-1, 4-2, 4-3, 4-4, and 4-5. Stage 100 may be, for example, a table formed of wood or a resin material, and can be any member on which power reception unit 20 can be placed. However, there is no limitation on the type of material and the like for stage 100 as long as it is formed of a material that transmits electromagnetic waves. Depending on the material and the like of stage 100, the presence of stage 100 may inhibit a user who handles power reception unit 20 from visually observing power supply coils 4-1 to 4-5. In FIGS. 23, power supply coils 4-1 to 4-5 are shown for convenience of description.

In power supply unit 10 of this variation, power supply coils 4-1, 4-2, 4-3, and 4-4 are arranged in the four corners, and power supply coil 4-5 is arranged in a region that is formed among power supply coils 4-1, 4-2, 4-3, and 4-4. With power supply unit 10 of this variation, as shown in FIG. 23B, wherever on stage 100 power reception unit 20 is disposed, power reception unit 20 can receive power from power supply unit 10 via at least any one of power supply coils 4-1, 4-2, 4-3, 4-4, and 4-5. Accordingly, the user who handles power reception unit 20 needs not to care much about the position on stage 100 at which power reception unit 20 should be placed.

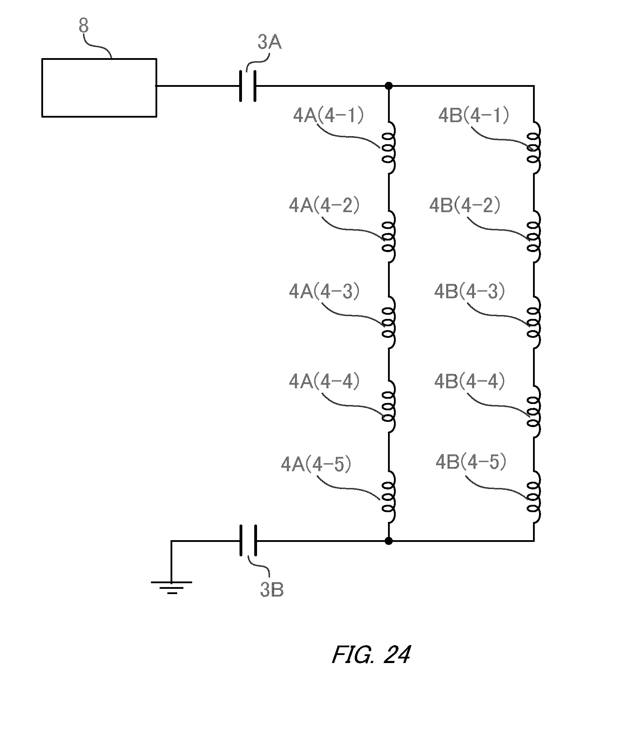

FIG. 24 is a diagram for explaining the configuration of the electrical connection of five power supply coils 4-1, 4-2, 4-3, 4-4, and 4-5 provided in power supply unit 10. With regard to the reference numerals shown in FIG. 24, at the end of "4A" and "4B" each indicating a planar coil, the reference numeral of a power supply coil having that planar coil is shown in the parentheses. In power supply unit 10 of this variation, the circuit configuration excluding the portions shown in FIG. 24 may be the same as the circuit configuration previously described in the foregoing embodiments.

As shown in FIG. 24, in power supply unit 10 of this variation, jth (where 1 ≤ j ≤m, and herein m = 2) planar coils from the inner side of five respective power supply coils 4-1, 4-2, 4-3, 4-4, and 4-5 are connected in series. More specifically, planar coil 4A of power supply coil 4-1, planar coil 4A of power supply coil 4-2, planar coil 4A of power supply coil 4-3, planar coil 4A of power supply coil 4-4, and planar coil 4A of power supply coil 4-5 are connected in series. Also, planar coil 4B of power supply coil 4-1, planar coil 4B of power supply coil 4-2, planar coil 4B of power supply coil 4-3, planar coil 4B of power supply coil 4-4, and planar coil 4B of power supply coil 4-5 are connected in series. Also, planar coils 4A and 4B of power supply coil 4-1, of five planar coils 4A, 4B that are connected in series, are connected to one end of first capacitor 3A. The other end of first capacitor 3A is connected to gate driving circuit 8. Also, planar coils 4A and 4B of power supply coil 4-5, of five planar coils 4A, 4B that are connected in series, are connected to one end of second capacitor 3B. The other end of second capacitor 3B is grounded. Gate driving circuit 8 feeds alternating currents of a common frequency to power supply coils 4-1 to 4-5.

Also, in the case where "n" power supply coils 4 are connected, occurrence of a variation in intensity among the magnetic fields that are generated in the arrangement space of power reception coil 23, the variation being attributed to a variation in the impedance among planar coils, can be suppressed by connecting planar coils that are located at the same position from the inner side in series. If planar coils of the "n" power supply coils 4, the planar coils being located at the same position from the inner side, are connected in parallel, a variation in the impedance among those planar coils causes a magnetic field to be easily generated on a planar coil having a low impedance, while making it difficult for a magnetic field to be generated on a planar coil having a high impedance, and thus there is a possibility that power supply may not be performed normally. In contrast, if a configuration is adopted in which the planar coils are connected in series as in this variation, even if the planar coils vary in impedance, occurrence of a variation in the intensity of the magnetic fields as described above can be suppressed.

However, if an adjustment is made so that the variation in impedance among planar coils is rendered negligible, it is also possible that the planar coils that are located at the same position from the inner side are connected in parallel.

Incidentally, in the case where power reception unit 20 is not placed on stage 100, the magnetic flux density in the arrangement space of power reception coil 23 is in a sufficiently low state. On the other hand, for example, if power reception unit 20 is placed on stage 100 above power supply coil 4-1, the magnetic flux density above power supply coil 4-1 increases due to, for example, the effect of mutual inductance of power supply coil 4-1 and power reception coil 23, allowing power to be supplied to power reception unit 20. In this manner, a power supply coil 4 corresponding to the position at which power reception unit 20 is placed generates a strong magnetic field. Accordingly, with power supply unit 10, even if gate driving circuit 8 continues to drive power supply coils 4, an unnecessary magnetic field is not generated when power reception unit 20 does not receive power. Thus, in power supply unit 10, wasteful power consumption can be suppressed.

Also, in power supply unit 10 of this variation, it is considered that power supply coils 4-1 to 4-5 are electromagnetically coupled to one another and have an effect on generation of a magnetic field in the arrangement space of power reception coil 23. For example, power supply coil 4-5 is located at a position that is close to all of power supply coils 4-1 to 4-4, and therefore electromagnetically coupled to power supply coils 4-1 to 4-4.

In this variation, a case where the number "n" of power supply coils 4 is 5 is described; however, the number "n" of power supply coils 4 may be between 2 and 4 inclusive or may be 6 or more. Also, the layout of "n" power supply coils 4 may be a layout other than the layout that is described using FIGS. 23, and is not limited to a particular layout. Also, even in power supply unit 10 of this variation, the number "m" of planar coils provided in a single power supply coil 4 may also be 3 or more, as described in the foregoing variation (4).

Also, in power supply unit 10 of this variation, the "n" power supply coils 4 are not necessarily required to be provided in the same plane, and a part or all of them may be arranged in different planes.
(5) In the foregoing embodiments, power reception unit 20 is described as an illumination device that includes a light-emitting circuit and the like; however, power reception unit 20 can be any device that includes at least power reception coil 23 and that operates using power that is received using power reception coil 23. For example, a power supply/reception device may be configured in which power supply unit 10 of the foregoing embodiment and power reception unit 20 that outputs power received by power reception coil 23 to the outside are unitized. This power supply/reception device corresponds to a transformer. Also, since power supply coil 4 and power reception coil 23 are constituted by planar coils, this power supply/reception device can be provided as a thin transformer.
(6) In the foregoing embodiments, planar coils 4A and 4B are connected in parallel, and these planar coils are driven by respective alternating currents that are fed by a single gate driving circuit 8. Instead, a configuration may also be adopted in which planar coils constituting power supply coil 4 are not connected to each other, but rather independent gate driving circuit 8 is provided for each planar coil. Also, those gate driving circuits 8 may feed alternating currents having different current values to a part or all of the planar coils constituting power supply coil 4, instead of feeding alternating currents having the same current value to those planar coils. Even in power supply unit 10 of this variation, if a plurality of gate driving circuits 8 feed alternating currents having a common frequency to respective planar coils, an effect that is equivalent to the effect of the foregoing embodiments is achieved.

It is also possible that power supply unit 10 has a detection circuit that detects a phase difference between alternating currents in respective planar coils of power supply coil 4, and gate driving circuits 8 control the phase of the alternating currents that are supplied to the respective planar coils of power supply coil 4 so as to reduce this phase difference.

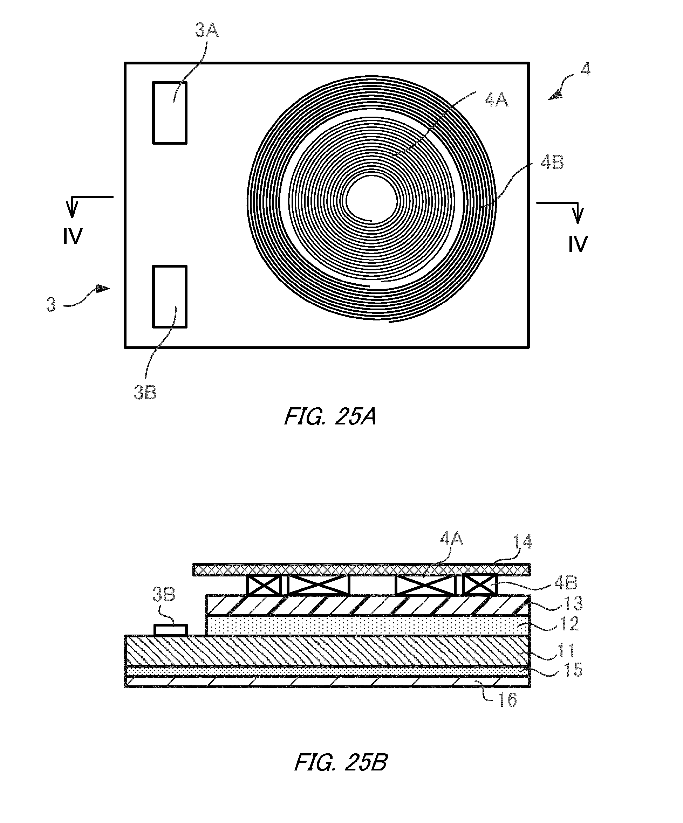

(7) FIGS. 25A and 25B show another embodiment of planar coils 4A and 4B, where FIG. 25A is a plan view, and FIG. 25B is a cross-sectional view taken along line IV-IV in FIG. 25A. As shown in FIGS. 25, first magnetic sheet 12, first spacer 13 having a heat dissipation sheet or a resin sheet, planar coils 4A and 4B, and second spacer 14 are stacked on substrate 11, and furthermore, second magnetic sheet 15 and heat dissipation plate 16 are disposed under substrate 11. As shown in FIG. 25A, capacitor 3 that is connected to substrate 11 is arranged to the left of power supply coil 4.

Magnetic sheets 12 and 15 that are arranged on the upper surface side and the lower surface side, respectively, of substrate 11 are each a sheet for so-called "electromagnetic noise reduction". Magnetic sheets 12 and 15 are each a magnetic material that is provided at a distance from power supply coil 4 so as to cover power supply coil 4 from a side opposite to the arrangement space of power reception coil 23. Heat dissipation plate 16 that is arranged on the lower surface side of substrate 11 is provided in order to dissipate heat that is generated by power supply coil 4 and conducted to substrate 11. A material having a high thermal conductivity can be used for heat dissipation plate 16. Examples of the material for heat dissipation plate 16 include A1 (aluminum) and Cu (copper), and in order to suppress a change in behavior of power supply coil 4 due to an external magnetic field, a nonmagnetic material is preferable. An alternating current flowing through power supply coil 4 is magnetically shielded by magnetic sheets 12 and 15, and therefore heat dissipation plate 16 is prevented from being inductively heated.

With power supply coil 4 of this variation, heat that is generated by power supply unit 10 and electromagnetic noise that is generated by inverter portion 2 can be reduced.
(8) A variation of the LED light-emitting portion will be described.

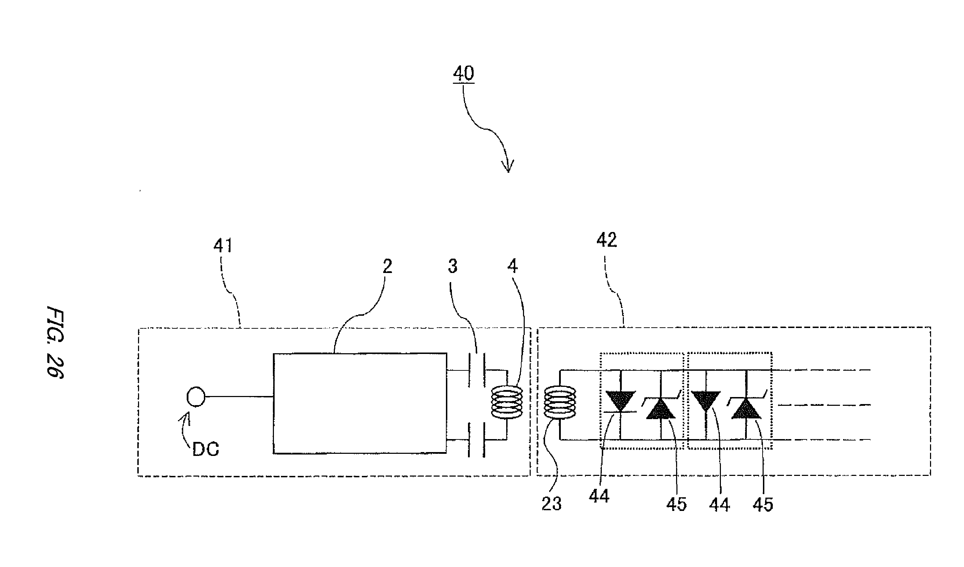

FIG. 26 is a block diagram showing the configuration of power supply/reception device 40. As shown in FIG. 26, power supply/reception device 40 includes power supply unit 41 and power reception unit 42. Power reception unit 42 has power reception coil 23 and at least one light-emitting diode 44 that is connected to power reception coil 23. Various types of light-emitting diodes 44 such as red, yellow, green, blue, violet, and white light-emitting diodes can be used as light-emitting diode 44. Protective diode 45 for light-emitting diode 44 is connected in parallel to light-emitting diode 44. A so-called Zener diode can be used as protective diode 45.

With power supply/reception device 40, light-emitting diode 44 can be turned on with an alternating current supplied to power reception coil 23, and the current flows through light-emitting diode 44 in a forward direction. In the case where the alternating current is in a reverse direction of light-emitting diode 44, since the Zener diode is connected, no current flows through light-emitting diode 44. Such power supply/reception device 40 can be used for an illumination device and a display device such as a traffic light. The brightness of light-emitting diode 44 can be adjusted by changing the current flowing through light-emitting diode 44. The current flowing through light-emitting diode 44 can be adjusted by changing the frequency of inverter portion 2. The frequency of inverter portion 2 can be adjusted by, for example, changing the frequency of oscillation circuit 6 shown in in FIG. 2.
(9) The configuration of a variation of the power supply/reception device will be described.

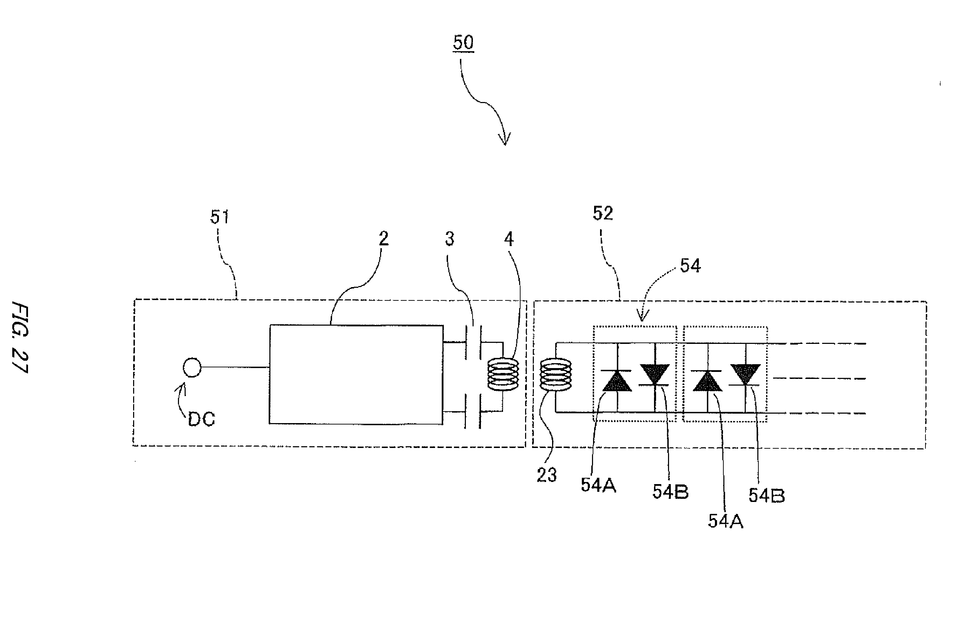

FIG. 27 is a block diagram showing the configuration of power supply/reception device 50. Power supply/reception device 50 shown in FIG. 27 has power supply unit 51 and power reception unit 52. Power supply/reception device 50 differs from power supply/reception device 40 in FIG. 26 in the manner in which light-emitting diodes 54 are connected. In power reception unit 52, each of light-emitting diodes 54 that are connected to power reception coil 23 includes a pair of light-emitting diodes 54A and 54B that are connected with opposite conduction directions, that is, in antiparallel, and the plurality of pairs of light-emitting diodes 54A and 54B are connected in parallel. Various types of light-emitting diodes 54 such as red, yellow, green, blue, violet, and white light-emitting diodes can be used as light-emitting diodes 54. Such power supply/reception device 50 can be used for an illumination device and a display device such as a traffic light. The brightness of light-emitting diodes 54 can be adjusted by changing the current flowing through light-emitting diodes 54, as previously described with respect to power supply/reception device 40.
(10) Next, still another embodiment of the power supply/reception device will be described.

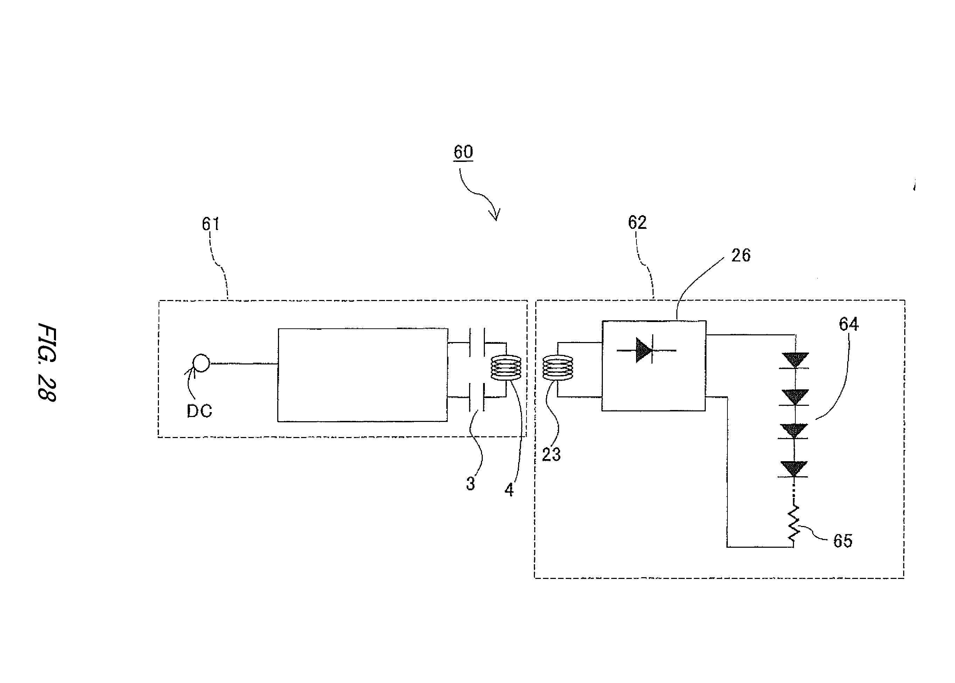

FIG. 28 is a block diagram showing the configuration of power supply/reception device 60. Power supply/reception device 60 shown in FIG. 28 includes power supply unit 61 and power reception unit 62. Power reception unit 62 has power reception coil 23, rectifier circuit 26 that is connected to power reception coil 23, and light-emitting diodes 64 that are connected to rectifier circuit 26.

In power supply/reception device 60, since rectifier circuit 26 is provided in power reception unit 62, a circuit for protecting light-emitting diodes 64 that are connected in series is not needed. Various types of light-emitting diodes 64 such as red, yellow, green, blue, violet, and white light-emitting diodes can be used as light-emitting diodes 64. Resistor 65 that is connected to illustrated light-emitting diodes 64 that are connected in series is a resistor for adjusting direct current. In power supply/reception device 60, light-emitting diodes 64 can be turned on by converting an alternating current that is supplied to power reception coil 23 into a direct current in rectifier circuit 26. The number of light-emitting diodes 64 that are connected in series can be determined with consideration given to the DC voltage that can be obtained in rectifier circuit 26. In power supply/reception device 60, it is possible to set the DC voltage generated in rectifier circuit 26 at a relatively high value and set the current at a low current that is required for one of the light-emitting diodes 64. Similarly to power supply/reception devices 40 and 50, such power supply/reception device 60 can be used for an illumination device and a display device such as a traffic light.
(11) Next, a circuit that is implemented by a light-emitting diode and the like which is applicable to power supply/reception devices 40 to 60 will be described.

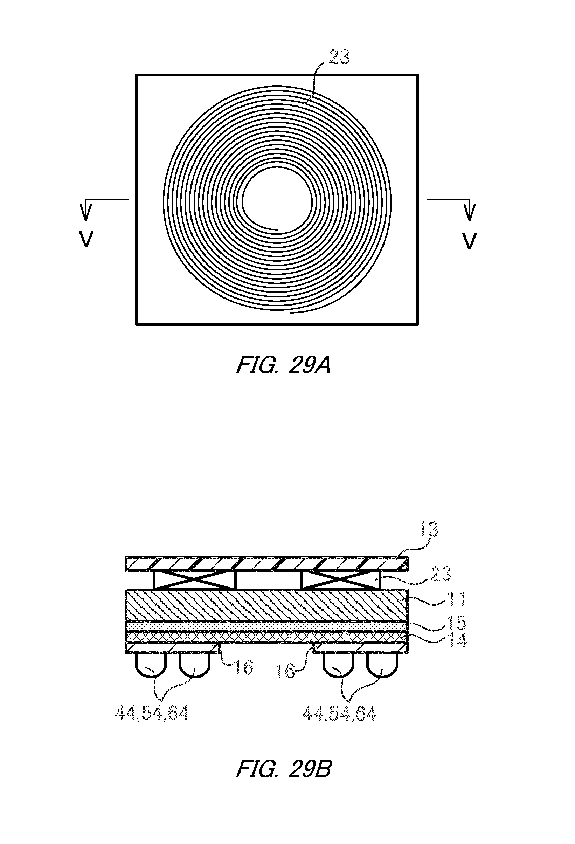

FIGS. 29A and 29B show a circuit that is implemented by a diode and the like which is applicable to power supply/reception devices 40 to 60, where FIG. 29A is a plan view, and FIG. 29B is a cross-sectional view taken along line V-V in FIG. 29A. As shown in FIGS. 29, power reception coil 23 and first spacer 13 are stacked on the upper side of substrate 11, and furthermore, magnetic sheet 15, second spacer 14, heat dissipation plate 16, and light-emitting diodes 44, 54, 64 are disposed on the lower side of substrate 11. A1 and the like can be used for heat dissipation plate 16. Spacer 13, which is disposed on the upper side of substrate 11, has the effects of preventing short-circuit when power reception coil 23 is arranged in close proximity and dissipating heat that is generated in power reception coil 23. Magnetic sheet 15, which is disposed on the lower side of substrate 11 is a sheet for so-called "electromagnetic noise reduction".

Heat dissipation plate 16, which is disposed on the lower side of substrate 11, is provided in order to dissipate heat that is generated in power supply coil 4 and conducted to substrate 11 and heat that is generated in the packages of light-emitting diodes 44, 54, 64. An alternating current that is received by power reception coil 23 is magnetically shielded by magnetic sheet 15, and therefore heat dissipation plate 16 is prevented from being inductively heated and generating heat. The above-described implementation of light-emitting diodes 44, 54, 64 can reduce heat that is generated in power supply coil 4 and light-emitting diodes 44, 54, 64 and electromagnetic noise that is generated in inverter portion 2.
(12) Next, yet another embodiment of the power supply/reception device in which a storage battery and the like are further provided in the power reception unit will be described.

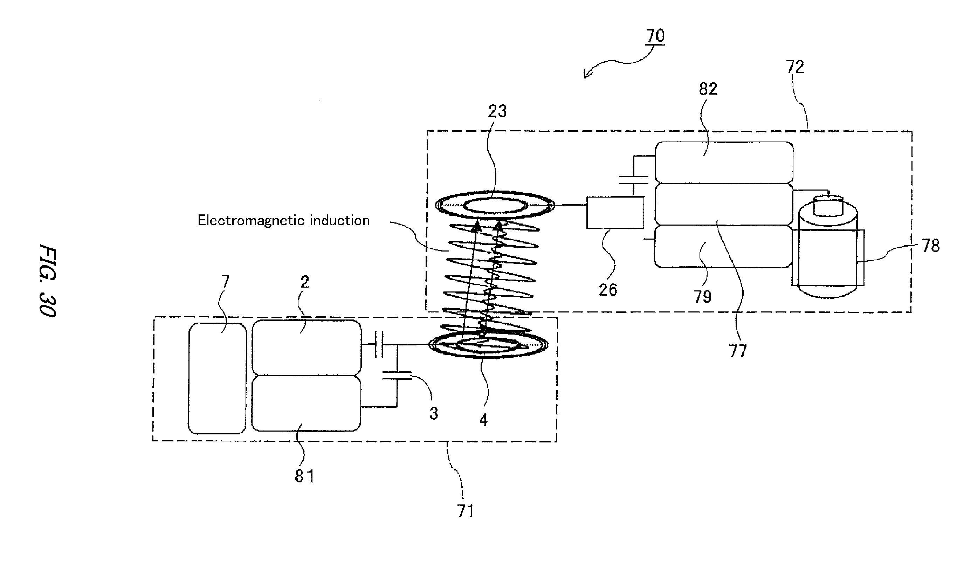

FIG. 30 is a block diagram of power supply/reception device 70. As shown in FIG. 30, power supply/reception device 70 includes power supply unit 71 and power reception unit 72. Power reception unit 72 has power reception coil 23, rectifier circuit 26 that is connected to power reception coil 23, and storage battery 78 that is connected to rectifier circuit 26 via charge control circuit 77. Power supply unit 71 is configured similarly to that of power supply/reception device 1A shown in FIG. 2. A secondary battery, such as a lithium-ion battery, which is rechargeable and dischargeable, can be used as storage battery 78.

With power supply/reception device 70, for example, in the case where a mobile device is connected to power reception unit 72, contactless power transmission to storage battery 78 that is built in this mobile device can be performed efficiently without generating heat.

It is also possible that power conversion circuit 79 is provided in power reception unit 72. Power conversion circuit 79 can be configured by a DC-to-DC converter that performs power conversion of a direct current obtained by rectifier circuit 26 using an inverter. This configuration makes it possible to use the mobile device of power reception unit 72 with two or more, that is, a plurality of DC sources converted by power conversion circuit 79 while using the power source on the side of power supply unit 71 as a single power source of 5 V, and thus improves the convenience.

It is also possible that data communication circuit 81 is provided in power supply unit 71 of power supply/reception device 70 and data communication circuit 82 is provided in power reception unit 72. With respect to a communication signal, inverter portion 2 in power supply unit 71 can be modulated so as to generate a carrier signal. The modulated signal may be demodulated in, for example, data communication circuit 82 on the side of power reception unit 72. With regard to the modulation method, a WPC (Wireless Power Consortium) method can be used. With this configuration, not only can power be supplied from power supply unit 71 to power reception unit 72, but also contactless communication, that is, wireless communication from power supply unit 71 to power reception unit 72 or from power reception unit 72 to power supply unit 71 is possible, and data communication can be performed between power supply unit 71 and power reception unit 72.
(13) Next, an embodiment of an illumination device in which a storage battery and an LED are further provided in the power reception unit will be described.

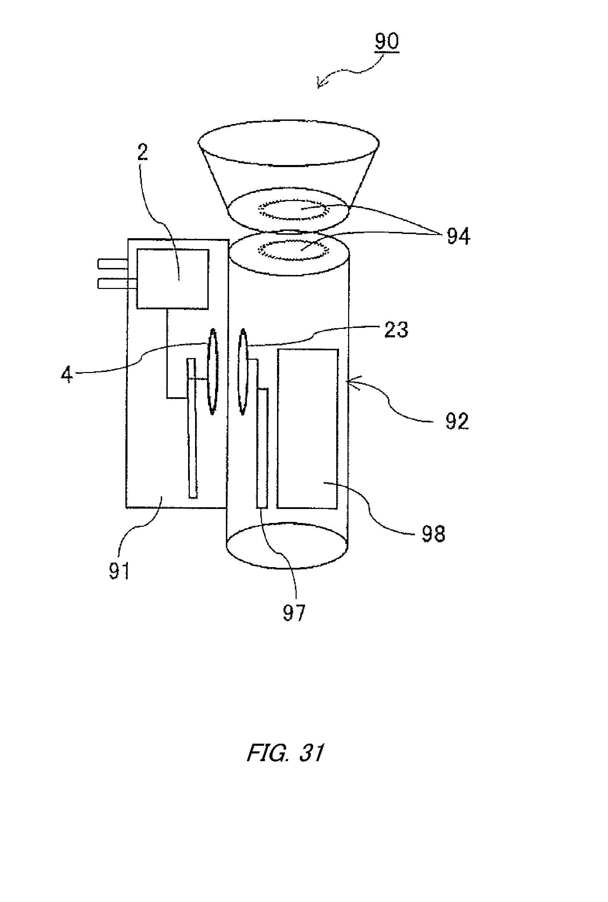

FIG. 31 is a block diagram showing another embodiment of illumination device 90 to which the power supply/reception device is applied. Illumination device 90 shown in FIG. 31 includes power supply unit 91 and power reception unit 92. Power reception unit 92 has light-emitting diodes 94, power reception coil 23, and storage battery 98 that is connected via charge control circuit 97 that is connected to power reception coil 23. In such an illumination device 90, if power supply unit 91 is configured by an AC source, power supply unit 91 can be used while being disconnected from the AC source at the moment when charging of storage battery 98 is completed. That is to say, illumination device 90 can be used as portable illumination device 90. In case an interruption of the AC source occurs, light-emitting diodes 94 can be driven by storage battery 98.

With illumination device 90 to which the present invention is applied, for example, contactless power transmission to storage battery 98 that is built in power reception unit 92 can be performed efficiently without generating heat.

Also, the light-emitting circuit of the present invention is not limited to an LED light-emitting portion, and may cause any light-emitting body other than LEDs to emit light as long as it emits light using electric power.

The present invention is not limited to the embodiments described above, and various modifications can be made without departing from the scope of the invention that is defined in the claims, and it goes without saying that those modifications are also embraced in the scope of the present invention.

## Claims

1. A power supply device that supplies power to a power reception device comprising a power reception coil using electromagnetic induction, the power supply device comprising:
a power supply coil in which "m" (where m ≥ 2) planar coils are formed by winding respective wire materials around a point on plane radially outward such that the "m" planar coils are provided in opposing relation to a space in which the power reception coil is arranged; and
a driving circuit that feeds alternating currents having a common frequency to the "m" planar coils, respectively, during power supply to the power reception device,
wherein a static magnetic field that is generated in the space when a direct current is fed to a (k-1)th and a kth (where 2 ≤ k ≤ m) planar coil of the power supply coil from the inner side is stronger at a position corresponding to an inner circumference of the kth planar coil than on either side relative to the position in a radial direction.

2. A power supply device that supplies power to a power reception device comprising a power reception coil that utilizes electromagnetic induction, the power supply device comprising:
a power supply coil in which "m" (where m ≥ 2) planar coils that are formed by winding respective wire materials around a point on a plane radially outward such that "m" planar coils are provided in opposing relation to a space in which the power reception coil is arranged; and
a driving circuit that feeds alternating currents having a common frequency to the "m" planar coils, respectively, during power supply to the power reception device,
wherein a difference in length between the wire materials of a (k-1)th and a kth (where 2 ≤ k ≤ m) planar coil of the power supply coil from the inner side is less than a length of an outer circumference of the kth planar coil.

3. The power supply device according to claim 1 or 2,
wherein the "m" planar coils have the same DC resistance value.

4. The power supply device according to claim 1 or 2,
wherein the "m" planar coils have the same DC resistance value and the same wire material length.

5. The power supply device according to claim 1 or 2,
wherein the "m" planar coils are connected in parallel.

6. The power supply device according to claim 1 or 2, comprising a capacitive element that is connected in series to the "m" planar coils.

7. The power supply device according to claim 1 or 2, comprising:
a magnetic material that is provided at a distance from the power supply coil so as to cover the power supply coil from a side opposite the space; and
a nonmagnetic material that is provided so as to cover the magnetic material from the side opposite the space.

8. The power supply device according to claim 1 or 2, comprising "n" (where n ≥ 2) of said power supply coils,
wherein the driving circuit feeds alternating currents having the common frequency to the "n" power supply coils, respectively.

9. The power supply device according to claim 8,
wherein jth (where 1 ≤ j ≤ m) planar coils of the "n" respective power supply coils from the inner side are connected in series.

10. A power reception device comprising a power reception coil,
wherein when the power reception coil is electromagnetically coupled to the power supply coil included in the power supply device according to claim 1 or 2, the power reception device receives power from the power supply device.

11. The power reception device according to claim 10,
wherein an inductance of the power reception coil is larger than an inductance of any of the planar coils that are provided in the power supply device.

12. A power supply/reception device comprising a power supply device that supplies power by electromagnetic induction and a power reception device that receives power from the power supply device. ,
wherein the power supply device comprises:
a power supply coil in which "m" (where m ≥ 2) planar coils that are formed by winding respective wire materials around a point on a plane radially outward such that the "m" planar coils are provided in opposing relation to a space in which the power reception coil is arranged; and
a driving circuit feeds alternating currents having a common frequency to the "m" planar coils, respectively, during power supply to the power reception device, and
a static magnetic field generated in the space when a direct current is fed to a (k-1)th and a kth (where 2 ≤ k ≤ m) planar coil of the power supply coil from the inner side is stronger at a position corresponding to an inner circumference of the kth planar coil than on either side relative to the position in a radial direction.

13. A power supply/reception device comprising a power supply device that supplies power by electromagnetic induction and a power reception device that receives power from the power supply device,
wherein the power supply device comprises:
a power supply coil in which "m" (where m ≥ 2) planar coils are formed by winding respective wire materials around a point on a plane radially outward, the "m" planar coils opposing a space in which the power reception coil is arranged; and
a driving circuit that feeds alternating currents having a common frequency to the "m" planar coils, respectively, during power supply to the power reception device, and
a difference in length between the wire materials of a (k-1)th and a kth (where 2 ≤ k ≤ m) planar coil of the power supply coil from the inner side is less than a length of an outer circumference of the kth planar coil.

14. The power supply/reception device according to claim 12 or 13,
wherein the power reception device has a light-emitting circuit that causes a light-emitting body to emit light using power received from the power supply device.
